# EUROPEAN PATENT APPLICATION

(11) **EP 4 589 290 A1**
(43) Date of publication of application: **23.07.2025**
(21) Application number: 23865226.7
(22) Date of filing: 24.08.2023
(51) Int. Cl.: G01N 27/83

(54) **NON-DESTRUCTIVE TESTING METHOD, PROGRAM, AND NON-DESTRUCTIVE TESTING SYSTEM**

(30) Priority: 12.09.2022 JP 2022144241
(71) Applicant: KONICA MINOLTA, INC., Tokyo 100-7015 (JP)
(72) Inventor: TESHIMA Katsunori, Tokyo 100-7015 (JP); HASHIMOTO Yoshiyuki, Hino-shi, Tokyo 191-8511 (JP); TAKAKURA Motonori, Hino-shi, Tokyo 191-8511 (JP); ARITOMI Yuuji, Hino-shi, Tokyo 191-8511 (JP)
(74) Representative: Hoffmann Eitle
(86) International application number: PCT/JP2023/030598
(87) International publication number: WO 2024/057869

(57) **Abstract**

The present invention enables more accurate non-destructive testing using magnetism. The present invention comprises: a first inspection step for magnetizing an inspection object 8 contained in a non-magnetic material 7 in the extending direction by a magnetic field application unit 3 and measuring the magnetic field originating from the magnetized inspection object 8; a second inspection step for magnetizing the inspection object 8 in the extending direction by the magnetic field application unit 3 so that the S polarity and the N polarity are opposite to the first inspection step and measuring the magnetic field originating from the magnetized inspection object 8; a third inspection data generation step for generating third inspection data on the basis of first inspection data based on the measurement results from the first inspection step and second inspection data based on the measurement results from the second inspection step; and a diagnosis step for diagnosing the inspection object 8 on the basis of the third inspection data, wherein in the third inspection data generation step, at least one of reducing noise magnetic field components other than the magnetic field components originating from the inspection object 8 and emphasizing the magnetic field components originating from the inspection object 8 is performed.

## Description

### Technical Field

The present invention relates to a non-destructive inspection method, a program, and a non-destructive inspection system.

### Background Art

An application range of a non-destructive inspection using magnetism includes diagnosis of fracture due to corrosion or deterioration of a magnetic material such as a reinforcing bar, a steel rod, or a wire contained in a non-magnetic material such as concrete or rubber. In particular, a fracture diagnosis of a bridge girder or a pier of a road or a railroad, or a PC steel material or a reinforcing bar in a floor slab may be included.

As a conventional technique for non-destructively performing fracture determination of a reinforcing bar or a PC steel material inside concrete using magnetism, an inspection apparatus using a leakage magnetic flux method has been proposed.

For example, Patent Document 1 describes a method in which data measured twice in opposite magnetization scanning directions are added together to double the magnetic force component of the inspection target reinforcing bar and cancel out the magnetic force component of a crossing reinforcing bar disposed so as to cross the inspection target reinforcing bar.

In such non-destructive inspection, a magnetic field is applied to the inspection target object and the magnetic field from the inspection target object is measured by the magnetic sensor. Then, with reference to the measurement data, it is possible to determine the presence or absence of damage of the inspection target object and a damaged portion.

In this case, the magnetic field component derived from the inspection target object is manifested by removing a magnetic field component (noise) other than the magnetic field component derived from the inspection target object or enhancing the magnetic field component derived from the inspection target object. The magnetic field component derived from the inspection target object is manifested, and thus it is easy to determine the presence or absence of damage and a damaged portion.

### Citation List

### Patent Literature

Patent Document 1: Japanese Patent No. 6305860

### Summary of Invention

### Technical Problem

However, when the crossing reinforcing bar has magnetic anisotropy, in the invention described in Patent Document 1, since the magnetization easy axis direction of the crossing reinforcing bar changes by 180 degrees in two measurements, the magnetization amounts of the S pole and the N pole of the crossing reinforcing bar do not become the same, and there is a possibility that the magnetic field components of the crossing reinforcing bar cannot be canceled out. In addition, when the inspection target reinforcing bar has magnetic anisotropy, since the magnetization direction is not changed in two measurements in the invention described in Patent Document 1, when the magnetization is in a direction in which magnetization is difficult in both of the two measurements, the magnetization amount is not sufficient, and there is a possibility that the inspection accuracy is deteriorated.

The present invention has been made in view of the above-described problems in the related art, and an object of the present invention is to provide a non-destructive inspection method, a non-destructive inspection program, and a non-destructive inspection system capable of more accurately performing a non-destructive inspection using magnetism.

### Solution to Problem

In order to solve the above-described problem, a non-destructive inspection method according to aspect 1 is a non-destructive inspection method in which a magnetic material contained in a non-magnetic material is an inspection target object, the method including:
first inspecting that includes applying a magnetic field generated from a magnetic field application unit to the inspection target object from an outside of the non-magnetic material to magnetize the inspection target object in an extending direction and measuring, with a magnetic sensor, the magnetic field leaking from the magnetized inspection target object to the outside of the non-magnetic material;
second inspecting that includes applying a magnetic field generated from the magnetic field application unit to the inspection target object from the outside of the non-magnetic material to magnetize the inspection target object in the extending direction to make an S pole and an N pole be an opposite direction to that in the first inspecting, and measuring the magnetic field leaking from the magnetized inspection target object to the outside of the non-magnetic material by the magnetic sensor;
generating third inspection data on the basis of first inspection data based on a measurement result of the first inspecting and second inspection data based on the measurement result of the second inspecting, and
diagnosing the inspection target object based on the third inspection data,
wherein in the third inspection data generating, at least one of reducing a noise magnetic field component other than a magnetic field component derived from the inspection target object and enhancing the magnetic field component derived from the inspection target object is performed.

The invention of aspect 2 is the non-destructive inspection method according to aspect 1, wherein in the third inspection data generating, the third inspection data is generated based on a difference between the first inspection data and the second inspection data.

The invention of aspect 3 is the non-destructive inspection method according to aspect 1, wherein,
the magnetic field application unit includes a permanent magnet including the S pole and the N pole at respective ends, and
in the first inspecting and the second inspecting, the magnetic field application unit is moved in the extending direction in a vertical arrangement in which an S pole side or an N pole side of the permanent magnet is brought close to a surface of the non-magnetic material and a pole side opposite to a pole brought close is kept away from the surface, and a direction of movement of the magnetic field application unit is opposite between the first inspecting and the second inspecting.

The invention of aspect 4 is the non-destructive inspection method according to aspect 1, wherein,
the magnetic field application unit includes a permanent magnet including the S pole and the N pole at respective ends, and
in the first inspecting and the second inspecting, the magnetic field application unit is moved in the extending direction in a horizontal arrangement in which an S pole side and an N pole side of the permanent magnet are along the extending direction on the surface of the non-magnetic material, and a direction of movement of the magnetic field application unit is opposite between the first inspecting and the second inspecting.

The invention of aspect 5 is the non-destructive inspection method according to aspect 3 or 4, wherein,
in the first inspecting, an edge of the permanent magnet having the S pole or the N pole is moved in a state of maintaining a right angle or a predetermined angle with respect to the extending direction, and
in the second inspecting, the edge of the permanent magnet having the S pole or the N pole is moved in a state of maintaining the same angle as an installation angle of the permanent magnet in the first inspecting with respect to the extending direction.

The invention of aspect 6 is the non-destructive inspection method according to aspect 5, wherein in the first inspecting and the second inspecting, an edge of the permanent magnet having the S pole or the N pole is moved in a state of maintaining parallel to the extending direction of the magnetic material other than the inspection target object which is contained in the non-magnetic material.

The invention of aspect 7 is the non-destructive inspection method according to aspect 1, wherein,
the magnetic sensor includes at least one pair of magnetic sensors disposed at different distances from a surface of the inspection target object in a vertical direction, and
the first inspection data and the second inspection data are values obtained by subtracting a measurement result of the magnetic sensor on a side far from the inspection target object from the measurement result of the magnetic sensor on the side close to the inspection target object.

The invention of aspect 8 is the non-destructive inspection method according to aspect 1, wherein the plurality of magnetic sensors have two dimensional inspection coordinates by being two dimensionally arranged in the extending direction and a horizontal direction orthogonal to the extending direction on at least one or more same faces, or the inspection coordinates can be changed by a scanning mechanism movable in the extending direction.

The invention of aspect 9 is the non-destructive inspection method according to aspect 8, wherein,
the magnetic sensor is a triaxial magnetic sensor that measures magnetic fields in three axial directions which are the extending direction, a first direction orthogonal to the extending direction, and a second direction orthogonal to the extending direction and the first direction, and
the first inspection data, the second inspection data, and the third inspection data include inspection data for each of the three axial directions for each of the inspection coordinates.

The invention of aspect 10 is the non-destructive inspection method according to aspect 1,
detecting, based on the first inspection data, a coordinate in the extending direction of the magnetic field derived from the magnetic material other than the inspection target object that intersects with the inspection target object and detecting, based on the second inspection data, the coordinate in the extending direction of the magnetic field derived from the magnetic material other than the inspection target object, and
sensing that there is a misregistration between the inspection positions in the first inspecting and the second inspecting in a case in which a difference between the coordinate of the first inspection data and the coordinate of the second inspection data detected in the coordinate detecting is equal to or larger than a predetermined threshold value.

The invention of aspect 11 is the non-destructive inspection method according to aspect 10, further including notifying a notification in a case in which the misregistration is sensed in the misregistration sensing.

The invention of aspect 12 is the non-destructive inspection method according to aspect 10 or 11, further including,
acquiring, as a correction value, a difference between the coordinate of the first inspection data and the coordinate of the second inspection data detected in the coordinate detecting, and
correcting the coordinate of the first inspection data and the coordinate of the second inspection data to coincide with each other based on the correction value acquired in the correction value acquiring.

The invention of aspect 13 is the non-destructive inspection method according to aspect 1, further including,
assigning identification information to the first inspection data,
assigning identification information to the second inspection data, and
associating the identification information assigned to the first inspection data and the identification information assigned to the second inspection data with each other,
wherein in the third inspection data generating, the third inspection data is generated based on the first inspection data and the second inspection data associated with each other in the associating.

The invention of aspect 14 is the non-destructive inspection method according to aspect 1, wherein the magnetic field application unit includes a permanent magnet or an electromagnet.

The invention of aspect 15 is the non-destructive inspection method according to aspect 1, wherein,
the magnetic field application unit and the magnetic sensor are integrated and configured to be capable of scanning,
in the first inspecting, measurement is performed while the magnetic sensor is moved in the extending direction subsequent to the magnetic field application unit, and
in the second inspecting, measurement is performed while the magnetic sensor is moved in a direction opposite to that in the first inspecting subsequently to the magnetic field application unit.

The invention of aspect 16 is the non-destructive inspection method according to aspect 1, wherein,
in the first inspecting, the magnetic field application unit is moved along the extending direction on two faces with a bending portion of a surface of the non-magnetic material as a boundary, the inspection target object is continuously magnetized, and the magnetic field leaking from the magnetized inspection target object to the outside of the non-magnetic material is measured on each of the two faces, and
in the second inspecting, the magnetic field application unit is moved in two faces with the bending portion of the surface of the non-magnetic material as the boundary along the extending direction, the inspection target object is continuously magnetized to make the S pole and the N pole be an opposite direction to that in the first inspecting, and the magnetic field leaking from the magnetized inspection target object to the outside of the non-magnetic material is measured in each of the two faces.

Further, the program according to aspect 17 is a program that causes a computer of an information processing apparatus included in a non-destructive inspection system in which a magnetic material contained in a non-magnetic material is an inspection target object to function as,
a first inspection data generator configured to generate first inspection data based on a measurement result of first inspecting of applying a magnetic field generated from a magnetic field application unit to the inspection target object from the outside of the non-magnetic material to magnetize the inspection target object in an extending direction and measuring the magnetic field leaking from the magnetized inspection target object to the outside of the non-magnetic material by a magnetic sensor;
a second inspection data generator configured to generate second inspection data based on a measurement result of second inspecting of applying the magnetic field generated from the magnetic field application unit to the inspection target object from the outside of the non-magnetic material to magnetize the inspection target object in the extending direction to make an S pole and an N pole be an opposite direction with respect to the first inspecting, and measuring the magnetic field leaking from the magnetized inspection target object to the outside of the non-magnetic material by the magnetic sensor;
a third inspection data generator configured to generate third inspection data based on the first inspection data and the second inspection data; and
a display controller configured to cause a display to display the third inspection data,
wherein
the third inspection data generator performs at least one of reducing a noise magnetic field component other than a magnetic field component derived from the inspection target object and enhancing the magnetic field component derived from the inspection target object.

The non-destructive inspection system according to aspect 18 is a non-destructive inspection system in which a magnetic material contained in a non-magnetic material is an inspection target object, the system including:
a first inspection data generator configured to generate first inspection data based on a measurement result of first inspecting of applying a magnetic field generated from a magnetic field application unit to the inspection target object from the outside of the non-magnetic material to magnetize the inspection target object in an extending direction and measuring the magnetic field leaking from the magnetized inspection target object to the outside of the non-magnetic material by a magnetic sensor;
a second inspection data generator configured to generate second inspection data based on a measurement result of second inspecting of applying the magnetic field generated from the magnetic field application unit to the inspection target object from the outside of the non-magnetic material to magnetize the inspection target object in the extending direction to make an S pole and an N pole be an opposite direction with respect to the first inspecting, and measuring the magnetic field leaking from the magnetized inspection target object to the outside of the non-magnetic material by the magnetic sensor;
a third inspection data generator configured to generate third inspection data based on the first inspection data and the second inspection data; and
a display controller configured to cause a display to display the third inspection data,
wherein the third inspection data generator performs at least one of reducing a noise magnetic field component other than a magnetic field component derived from the inspection target object and enhancing the magnetic field component derived from the inspection target object.

The invention of aspect 19 is the non-destructive inspection system according to aspect 18, further including,
a non-destructive inspection apparatus including the first inspection data generator, the second inspection data generator, and the third inspection data generator; and
an information processing apparatus that is configured to be communicable with the non-destructive inspection apparatus and that includes the display controller.

The invention of aspect 20 is the non-destructive inspection system according to aspect 19, wherein,
the non-destructive inspection apparatus includes,
a coordinate detector that detects, based on the first inspection data, a coordinate in the extending direction of the magnetic field derived from the magnetic material other than the inspection target object that intersects with the inspection target object and that detects, based on the second inspection data, the coordinate in the extending direction of the magnetic field derived from the magnetic material other than the inspection target object,
a misregistration sensor that senses that there is a misregistration between inspection positions in the first inspecting and the second inspecting in a case in which a difference between the coordinate of the first inspection data and the coordinate of the second inspection data detected by the coordinate detector is equal to or larger than a predetermined threshold value,
a correction value acquirer that acquires, as a correction value, a difference between the coordinate of the first inspection data and the coordinate of the second inspection data detected by the coordinate detector, and
a position corrector that corrects the coordinate of the first inspection data and the coordinate of the second inspection data to coincide with each other based on the correction value acquired by the correction value acquirer.

### Advantageous Effects of Invention

According to the present invention, non-destructive inspection using magnetism can be performed with higher accuracy.

### Brief Description of Drawings

[FIG. 1] This is a diagram of an overall configuration of a non-destructive inspection system according to an embodiment of the present invention.
[FIG. 2] This is an exploded perspective view of a sensor unit according to an embodiment of the present invention.
[FIG. 3] This is a diagram illustrating an example of magnetization of a sound inspection target object.
[FIG. 4] This is a diagram illustrating an example of magnetization of a fractured inspection target object.
[FIG. 5A] This is an example of a waveform diagram of Z-axis direction components of a leakage flux distribution from a magnetized sound inspection target object.
[FIG. 5B] This is an example of a waveform diagram of X-axis direction components of the leakage flux distribution from the magnetized sound inspection target object.
[FIG. 5C] This is an example of a waveform diagram of Y-axis direction components of the leakage flux distribution from the magnetized sound inspection target object.
[FIG. 6A] This is an example of a waveform diagram of Z-axis direction components of the leakage flux distribution from a fractured magnetized inspection target object.
[FIG. 6B] This is an example of a waveform diagram of X-axis direction components of the leakage flux distribution from the fractured magnetized inspection target object.
[FIG. 6C] This is an example of a waveform diagram of Y-axis direction components of the leakage flux distribution from the fractured magnetized inspection target object.
[FIG. 7] This is a system block diagram including a block of a circuit configuration for generating main data and reference data.
[FIG. 8] This is a flowchart illustrating a non-destructive inspection flow.
[FIG. 9] This is a diagram in which a magnetic field application unit is positively magnetized in a vertical arrangement.
[FIG. 10] This is a diagram in which a magnetic field application unit is positively magnetized in a horizontal arrangement.
[FIG. 11A] This is a waveform diagram of the Z-axis direction components in first inspection data.
[FIG. 11B] This is a waveform diagram of the X-axis direction components in the first inspection data.
[FIG. 11C] This is a waveform diagram of the Y-axis direction components in the first inspection data.
[FIG. 12] This is a view in which a magnetic field application unit is reversely magnetized in a vertical arrangement.
[FIG. 13] This is a view in which the magnetic field application unit is reversely magnetized in a horizontal arrangement.
[FIG. 14A] This is a waveform diagram of the Z-axis direction components in second inspection data.
[FIG. 14B] This is a waveform diagram of the X-axis direction components in the second inspection data.
[FIG. 14C] This is a waveform diagram of the Y-axis direction components in the second inspection data.
[FIG. 15] This is a flowchart illustrating a flow of a misregistration sensing and correction step.
[FIG. 16] This is a view illustrating a state in which misregistration occurs.
[FIG. 17A] This is a waveform diagram of the Z-axis direction components in third inspection data.
[FIG. 17B] This is a waveform diagram of the X-axis direction components in the third inspection data.
[FIG. 17C] This is a waveform diagram of the Y-axis direction components in the third inspection data.
[FIG. 18] This is a diagram illustrating a state in which an inspection target object and a crossing reinforcing bar diagonally cross each other according to a modification example 1.
[FIG. 19A] This is a diagram illustrating an example of performing positive magnetization in a state in which the inspection target object and the crossing reinforcing bar diagonally cross each other in the modification example 1.
[FIG. 19B] This is a diagram illustrating an example of performing reverse magnetization in a state in which the inspection target object and the crossing reinforcing bar diagonally cross each other in the modification example 1.
[FIG. 20A] This is a view showing a case in which a first inspection step for a plurality of measurement surfaces is collectively executed in a modification example 2.
[FIG. 20B] This is a view showing a case in which a second inspection step for a plurality of measurement surfaces is collectively performed in the modification example 2.
[FIG. 21] This is a diagram illustrating an example of an inspection data list screen in the modification example 2.
[FIG. 22] This is a diagram illustrating an example of an inspection data edit screen in the modification example 2.
[FIG. 23A] This is a diagram illustrating an example of a first inspection step performed by a non-destructive inspection apparatus of a modification example 3.
[FIG. 23B] This is a diagram showing an example of a second inspection step performed by the non-destructive inspection apparatus of the modification example 3.
[FIG. 24A] This is a view showing an example of a first magnetization step in a modification example 4.
[FIG. 24B] This is a view showing an example of a second magnetization step in the modification example 4.
[FIG. 25A] This is a diagram showing an example of the inspection target object and the crossing reinforcing bar after the first magnetization step in the modification example 4.
[FIG. 25B] This is a view showing an example of the inspection target object and the crossing reinforcing bar after the second magnetization step in the modification example 4.
[FIG. 26A] This is a view showing an example of measuring a first face in the modification example 4.
[FIG. 26B] This is a view showing an example of measuring a second face in the modification example 4.

### Description of Embodiments

An embodiment of the present invention will be described below with reference to the drawings. The following is one embodiment of the present invention and does not limit the present invention.

### (1. Configuration of Non-Destructive Inspection System)

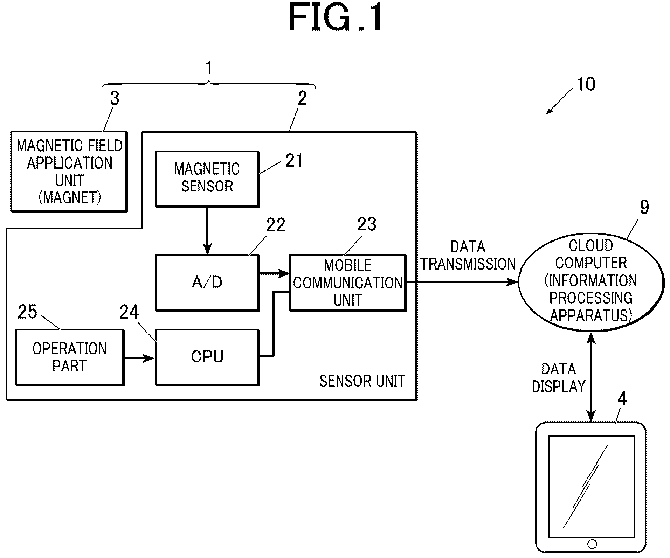

An overview of a non-destructive inspection method according to an embodiment of the present invention and a non-destructive inspection system according to an embodiment of the present invention for implementing the method will be described. FIG. 1 shows a whole configuration diagram of a non-destructive inspection system according to an embodiment of the present invention.

As illustrated in FIG. 1, a non-destructive inspection system 10 according to the present embodiment includes a non-destructive inspection apparatus 1, a cloud computer 9, and a portable computer 4.

The non-destructive inspection apparatus 1 includes a sensor unit 2 and a magnetic field application unit 3.

The sensor unit 2 is a block for magnetic measurement, and includes a plurality of magnetic sensors 21.

The magnetic sensor 21 may be a uniaxial sensor that senses a magnetic field component in a uniaxial direction from a direction of an inspection target object, but is more preferably a triaxial sensor that can obtain a three dimensional magnetic field distribution around the magnetic sensor. In a case in which the triaxial sensor is applied as the magnetic sensor 21, the triaxial sensor capable of sensing the magnetic field components in three axis directions orthogonal to each other is preferable, but the magnetic sensor 21 may be configured by a combination of three uniaxial sensors in which sensor axes are respectively disposed in the three axis directions.

Known examples of the magnetic sensor 21 include a Hall element that is a semiconductor sensor, and an MR sensor, an MI sensor, and a TMR sensor that are magnet resistive sensors. In the non-destructive inspection apparatus 1 of the present embodiment, a Hall element sensor is adopted in view of a balance between magnetic sensitivity and dynamic range.

Measurement data generated by converting a voltage generated in the magnetic sensor 21 into a digital value by an A/D unit 22 is transmitted to the outside via a mobile communication unit 23.

The sensor unit 2 includes an operation part 25 in addition to a central processing unit (CPU) 24 that performs overall control.

The data transmitted from the sensor unit 2 is subjected to processing for inspection by the cloud computer 9 that is an example of an information processing apparatus of the non-destructive inspection system 10.

In this way, the non-destructive inspection apparatus 1 can externally output measurement data by the sensor unit 2. As a form in which the measurement data can be externally output, in addition to wired or wireless data communication, the measurement data may be saved in a recording medium detachably attachable to the sensor unit 2.

In the present embodiment, the magnetic field application unit 3 includes, but is not limited to, a rectangular parallelepiped permanent magnet. For example, an electromagnet may be included instead of the permanent magnet, and the shape of the permanent magnet is not limited to the rectangular parallelepiped.

The inspection target object in the present embodiment is, for example, a magnetic material such as a steel material contained in a non-magnetic material such as a concrete structure.

A leakage flux method is used as a measurement method in the present embodiment.

Specifically, the magnetic field application unit 3 is moved while being in contact with a surface (measurement surface) of the non-magnetic material containing the magnetic material as the inspection target object, and the magnetic material as the inspection target object is magnetized. Thereafter, the magnetic sensor 21 measures a leakage magnetic flux from the magnetic material which is the magnetized inspection target object.

The cloud computer 9 is a web server.

The cloud computer 9 includes a computer such as a CPU, and executes various types of processing. For example, the cloud computer 9 can immediately process the measurement data uploaded from the sensor unit 2 and display the measurement data using a browser application of the portable computer 4.

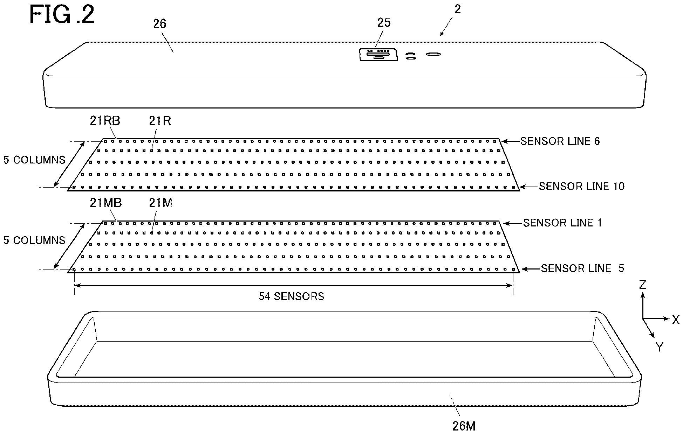

FIG. 2 is an exploded perspective view of the sensor unit 2 according to the present embodiment. In the drawings, three orthogonal axis directions (an X-axis direction, a Y-axis direction, and a Z-axis direction) are illustrated.

In the present embodiment, the magnetic sensor 21 includes a main sensor 21M and a reference sensor 21R.

As illustrated in FIG. 2, a substrate 21M on which a plurality of main sensors 21MB are mounted and a substrate 21R on which a plurality of reference sensors 21RB are mounted are arranged in a housing 26.

As illustrated in FIG. 2, on the substrate 21MB, sensor lines in which a plurality of main sensors 21M (e.g., 54 sensors) are arranged in parallel in the X-axis direction are mounted in a plurality of columns (e.g., five columns (sensor line 1 to sensor line 5)) in the Y-axis direction.

Similarly, as illustrated in FIG. 2, on the substrate 21RB, the line sensors in which a plurality of reference sensors 21R (e.g., 54 sensors) are arranged in parallel in the X-axis direction are mounted in a plurality of columns (e.g., five columns (sensor line 6 to sensor line 10)) in the Y-axis direction.

That is, a plurality of magnetic sensors 21 are two dimensionally arranged in the X-axis direction (extending direction of the inspection target object) and the Y-axis direction (horizontal direction orthogonal to the extending direction) on at least one or more same surfaces, thereby having two dimensional inspection coordinates.

Note that the number of magnetic sensors 21 is not limited to the example illustrated in FIG. 2.

The substrate 21MB is arranged close to the measurement surface 26M, and the substrate 21RB is arranged at a position separated from the substrate 21MB by a predetermined length (for example, a 2 cm) in the Z-axis positive direction.

That is, the magnetic sensor 21 includes at least one pair of magnetic sensors (the main sensor 21M and the reference sensor 21R) disposed at different distances in the Z-axis direction (vertical direction from the front face of the inspection target object).

The measurement surface 26M is one of the outer surfaces of the housing 26 parallel to an XY plane and is the side close to which the substrate 21MB is arranged.

In a space on the side opposite to a measurement surface 26M side in the housing 26, in addition to the operation part 25, the A/D unit 22, the mobile communication unit 23, a circuit board on which the CPU 24 and the like are mounted, and the like are arranged.

For example, the sensor unit 2 configured as described above can obtain a measurement value at each of XY coordinates (inspection coordinates) along the measurement surface 26M.

Note that the sensor unit 2 is not limited to a sensor array type in which a plurality of magnetic sensors are arranged in the X-axis direction and the Y-axis direction as described above. Assuming that the X-axis direction is the extending direction of the inspection target object, the sensor unit 2 may be of a scanning type in which the plurality of magnetic sensors 21 arranged in the Y-axis direction perform sensing while being moved in the X-axis direction. That is, the sensor unit 2 may be configured such that the inspection coordinates can be changed by a scanning mechanism movable in the X-axis direction (the extending direction of the inspection target object).

### (2. Measurement Principle of Leakage Flux Method)

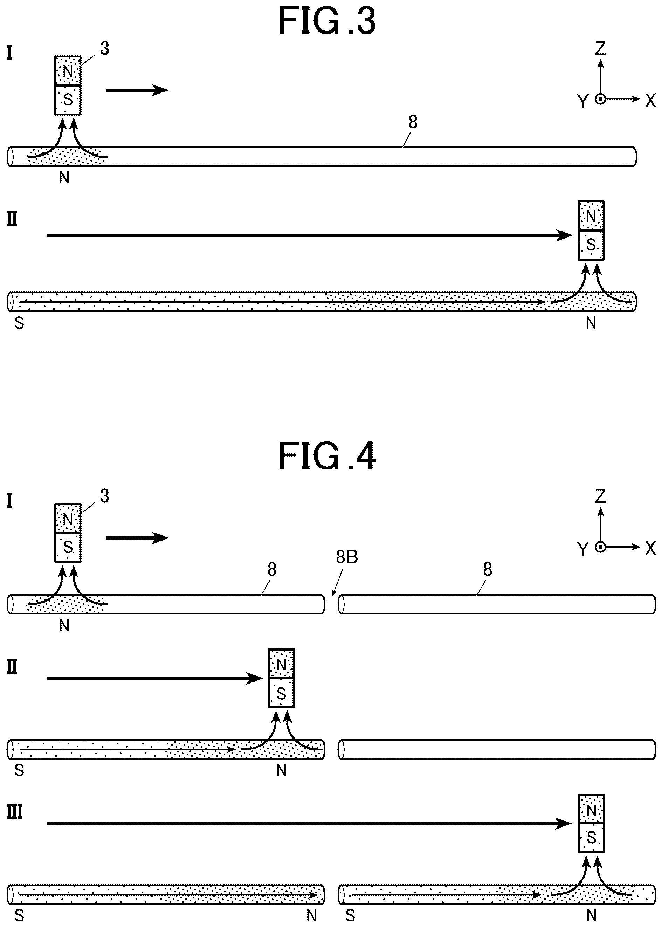

The principle of measurement by the leakage flux method according to the present invention will be described with reference to FIG. 3 to FIG. 6C.

In the example shown in FIG. 3 and FIG. 4, it is assumed that an inspection target object 8 is contained in the non-magnetic material such as concrete. The inspection target object 8 is assumed to be a reinforcing bar steel rod or a PC steel material that is a magnetic material. Further, in the example shown in FIG. 4, it is assumed that a fracture portion 8B with a gap about 1 cm is generated in a central portion of the inspection target object 8. In the examples shown in FIG. 3 and FIG. 4, the non-magnetic material (concrete) around the inspection target object 8 is not shown.

In the leakage magnetic flux method, first, the magnetic field application unit 3 is moved while being brought into contact with a surface (measurement surface) of the non-magnetic material containing the inspection target object 8, and the inspection target object 8 is magnetized.

In the example illustrated in FIG. 3 and FIG. 4, the magnetic field application unit 3 is moved in the positive direction of the X-axis while being in contact with the surface of the non-magnetic material in the vertical arrangement in which a S pole side of the permanent magnet included in the magnetic field application unit 3 is made close to the surface of the non-magnetic material and a N pole side is made far from the surface of the non-magnetic material.

As a result, as shown in FIG. 3, the sound inspection target object 8 having no fracture is magnetized such that the positive side in the X-axis direction is a N pole and the negative side in the X-axis direction is a S pole.

On the other hand, as shown in FIG. 4A, a portion other than the fracture portion 8B of the fractured inspection target object 8 is magnetized, but the fractured portion 8B is not magnetized. In addition, the inspection target object 8 positioned on the negative side in the X-axis direction and the inspection target object 8 positioned on the positive side in the X-axis direction with the fracture portion 8B as the origin position are magnetized such that the positive side in the X-axis direction is the N pole and the negative side in the X-axis direction is the S pole.

Note that the method of magnetizing the inspection target object 8 is not limited to the examples illustrated in FIG. 3 and FIG. 4. The magnetic field application unit 3 may be brought into contact with the surface of the non-magnetic material in the vertical arrangement in which the N pole side of the permanent magnet included in the magnetic field application unit 3 is close to the surface of the non-magnetic material and the S pole side is far from the surface of the non-magnetic material. Alternatively, the permanent magnet included in the magnetic field application unit 3 may be moved in the negative X-axis direction while being in contact with the surface of the non-magnetic material.

In addition, the permanent magnet included in the magnetic field application unit 3 may be moved while being brought into contact with the surface of the non-magnetic material in a horizontal arrangement such that both magnetic poles of the S pole and the N pole of the permanent magnet included in the magnetic field application unit 3 are along the extending direction (X-axis direction) of the inspection target object 8.

After magnetizing the inspection target object 8, a leakage magnetic flux distribution from the inspection target object 8 is measured by the magnetic sensor 21.

Note that in the present embodiment, the magnetic sensor 21 is a triaxial sensor capable of sensing magnetic field components in three axis directions orthogonal to each other. That is, the magnetic sensor 21 is a triaxial magnetic sensor that measures a magnetic field in three axis directions which are the extending direction (X-axis direction) of the inspection target object 8, a first direction (Y-axis direction) orthogonal to the extending direction (X-axis direction), and a second direction (Z-axis direction) orthogonal to the extending direction (X-axis direction) and the first direction (Y-axis direction).

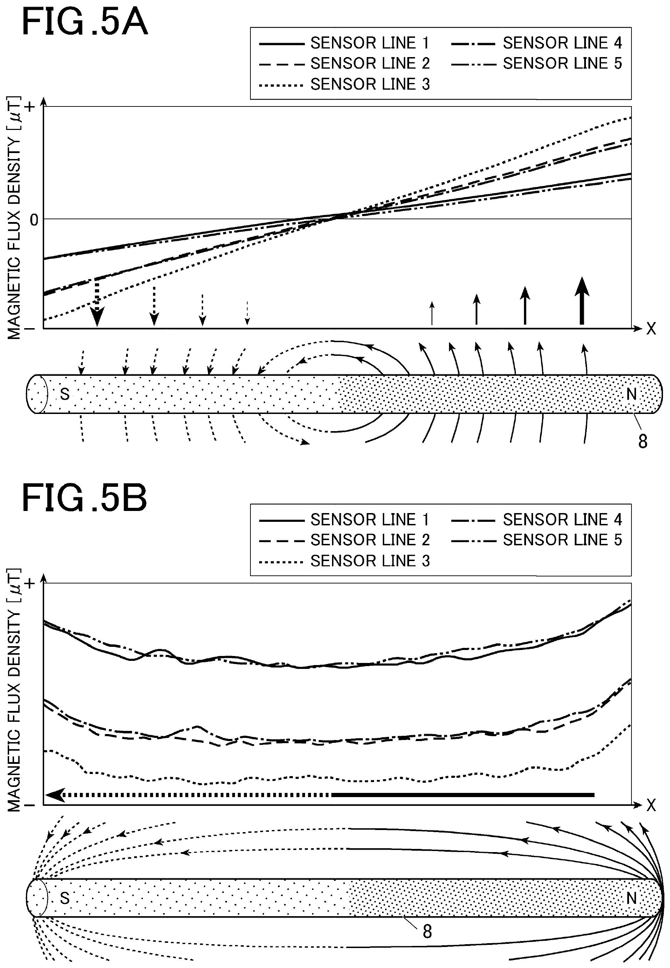

FIG. 5A to FIG. 5C illustrate an example of a waveform diagram of leakage flux distribution along the X-axis direction from the sound inspection target object 8 illustrated in FIG. 3.

FIG. 5A to FIG. 5C illustrate leakage flux distributions separated from the inspection target object 8 by certain distances in the Z-axis direction by the main sensor 21M of the magnetic sensor 21. Further, FIG. 5A to FIG. 5C show a case in which the sensor line 3 mounted on the substrate 21MB performs measurement at a position located at the center of the inspection target object 8 in the Y-axis direction.

FIG. 5A shows a waveform diagram of the Z-axis direction components of the leakage flux distribution.

As illustrated in FIG. 5A, the waveform of the Z-axis direction component changes substantially linearly upward to the right from the S pole to the N pole.

FIG. 5B shows a waveform diagram of the X-axis direction components of the leakage flux distribution.

As illustrated in FIG. 5B, the waveform of the X-axis direction component is a substantially flat waveform over the entire measurement range.

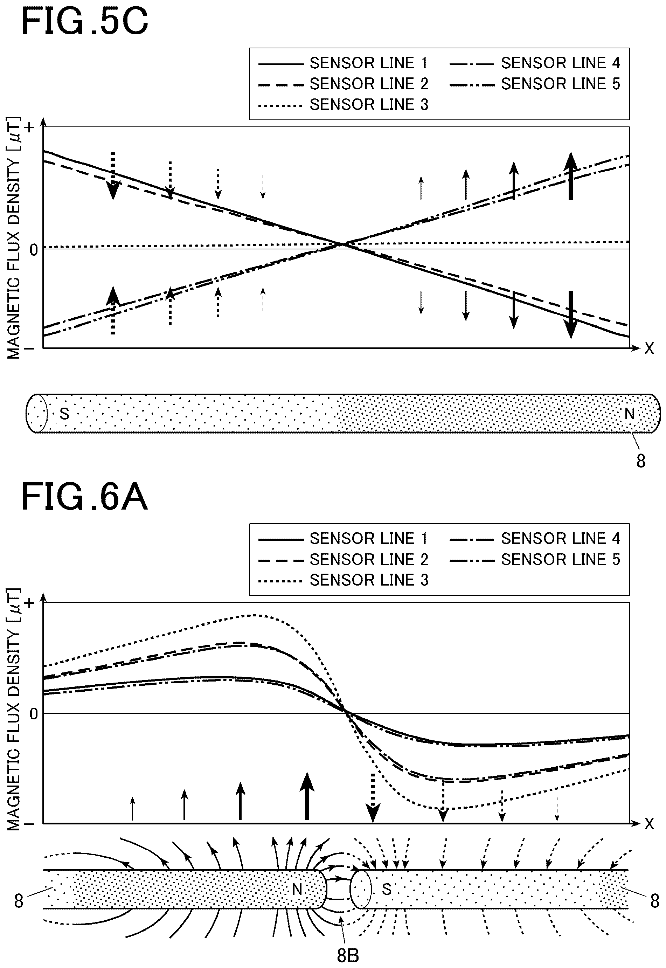

FIG. 5C shows a waveform diagram of the Y-axis direction components of the leakage flux distribution.

As illustrated in FIG. 5C, among the waveforms of the Y-axis direction component, the waveform measured by the sensor line 3 indicates substantially zero over the entire measurement range. The waveforms measured by the sensor line 1 and the sensor line 2 change substantially linearly downward to the right from the S pole to the N pole. The waveforms measured by the sensor line 4 and the sensor line 5 change substantially linearly upward to the right from the S pole to the N pole. Then, the waveform measured by the sensor line 1 and the sensor line 2 and the waveform measured by the sensor line 4 and the sensor line 5 intersect each other at a magnetic flux density of substantially zero at the central portion of the inspection target object 8 in the X-axis direction.

FIG. 6A to FIG. 6C show an example of a waveform diagram of the leakage flux distribution along the X-axis direction of the fractured inspection target object 8 shown in FIG. 4.

FIG. 6A to FIG. 6C illustrate leakage flux distributions separated from the inspection target object 8 by certain distances in the Z-axis direction by the main sensor 21M of the magnetic sensor 21. Further, FIG. 6A to FIG. 6C show a case in which the sensor line 3 mounted on the substrate 21MB performs measurement at a position located at the center of the inspection target object 8 in the Y-axis direction.

FIG. 6A shows a waveform diagram of the Z-axis direction components of the leakage flux distribution.

As illustrated in FIG. 6A, the waveform of the Z-axis direction component changes substantially linearly upward to the right in a portion other than the vicinity of the fracture portion 8B. However, at the fracture portion 8B, the direction of the magnetic flux is reversed from the other portions, so that the direction changes downward to the right. Thus, an inverted S-shaped waveform is generated in the vicinity of the fracture portion 8B.

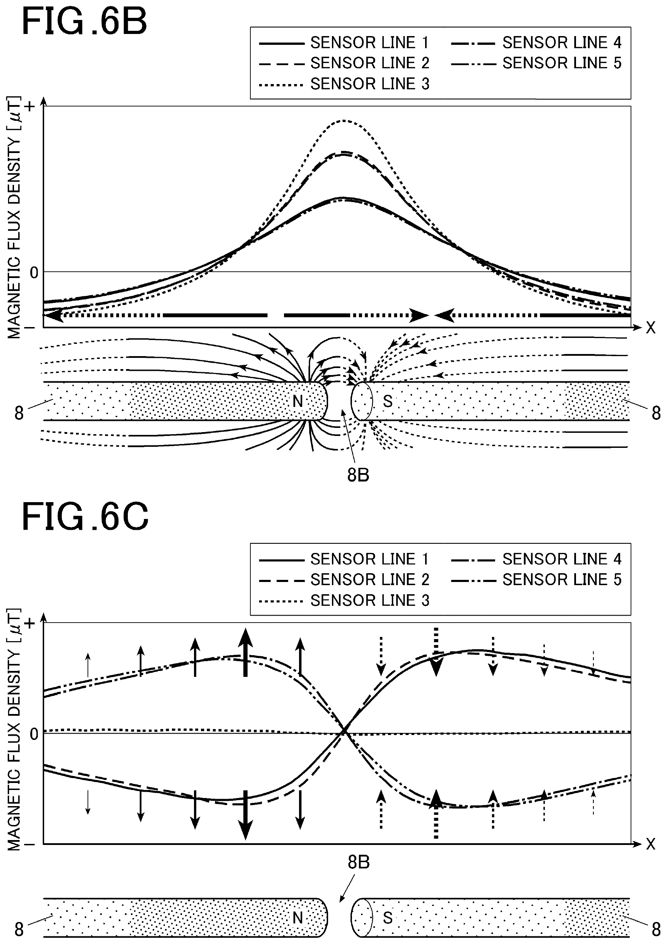

FIG. 6B shows a waveform diagram of the X-axis direction components of the leakage flux distribution.

As illustrated in FIG. 6B, since the direction of the magnetic flux is inverted from the other portion at the fracture portion 8B, the waveform of the X-axis direction component is an upwardly convex waveform centering on the fracture portion 8B.

FIG. 6C shows a waveform diagram of the Y-axis direction components of the leakage flux distribution.

As illustrated in FIG. 6C, among the waveforms of the Y-axis direction component, the waveform measured by the sensor line 3 indicates substantially zero over the entire measurement range. The waveforms measured by the sensor line 1 and the sensor line 2 are S-shaped waveforms over the entire measurement range. Furthermore, the waveforms measured by the sensor line 4 and the sensor line 5 are inverted S-shaped waveforms over the entire measurement range. The waveforms measured by the sensor line 1 and the sensor line 2 and the waveforms measured by the sensor line 4 and the sensor line 5 intersect each other at the fracture portion 8B where the magnetic flux density is substantially zero.

As described above, the difference in the leakage magnetic flux distribution from the inspection target object 8 due to the presence or absence of fracture can be captured by the non-destructive inspection apparatus 1.

The leakage flux (magnetic field) distribution curves as illustrated in FIG. 5A to FIG. 6C are formed by execution of processing for generating an image for display on the cloud computer 9 in FIG. 1 based on the measurement data and are displayed on the browser of the portable computer 4 and other PCs. The user can check the presence or absence of the fracture with reference to the magnetic field distribution curve.

### (3. Generation of Two Dimensional Distribution Magnetic Data)

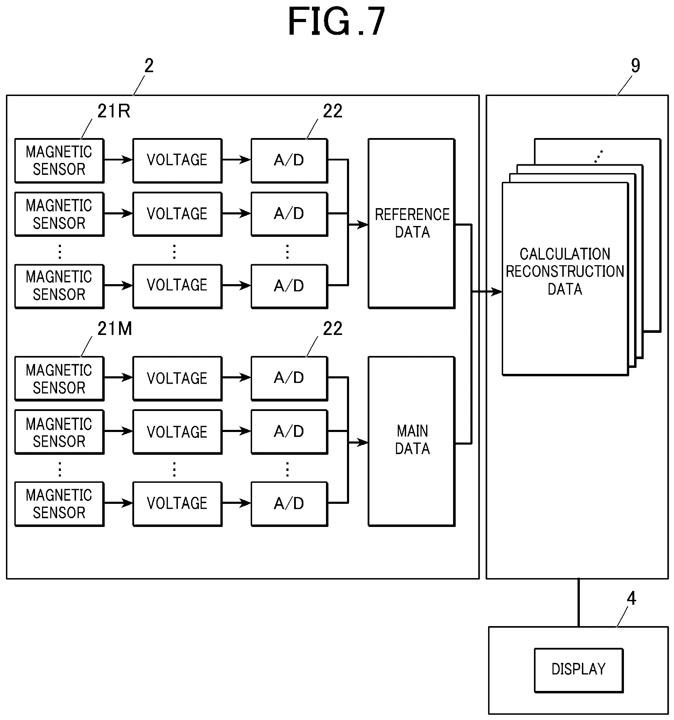

The creation of the two dimensional distribution magnetic data of the present embodiment will be described with reference to FIG. 7.

As illustrated in FIG. 2, the sensor unit 2 of the non-destructive inspection apparatus 1 includes the plurality of magnetic sensors 21 (the main sensor 21M and the reference sensor 21R).

Here, a Hall element sensor is applied as the magnetic sensor 21. The Hall element sensor has a characteristic that its electromotive force changes according to intensity of the applied magnetic field.

As illustrated in FIG. 7, an analog voltage change of the magnetic sensor 21 is subjected to A/D conversion in the A/D unit 22 to generate digital data. In this way, main-data, which is a group of measurement values at respective measurement positions by the main sensor 21M, and reference-data, which is a group of measurement values at respective measurement positions by the reference sensor 21R, are generated. Each of the main data and the reference data is two dimensional distribution data having measurement values at measurement positions two dimensionally arranged on the XY plane. The main data and the reference data are transmitted from the non-destructive inspection apparatus 1 to the cloud computer 9.

Based on the main data and the reference data, the cloud computer 9 performs a correction calculation to calculate calculation reconstruction data in which magnetic field data derived from the inspection target object 8 is extracted. The cloud computer 9 generates and outputs a display image based on the calculation reconstruction data. The display image is displayed on the portable computer 4 or the like and is used for diagnosis by the user.

Note that the cloud computer 9 may generate a magnetic field map based on the calculation reconstruction data and display the magnetic field map on the portable computer 4 or the like.

Further, the calculation reconstruction data may be generated in the sensor unit 2.

Further, when the non-destructive inspection apparatus 1 includes a display part, a display image based on the calculation reconstruction data may be displayed on the display of the non-destructive inspection apparatus 1.

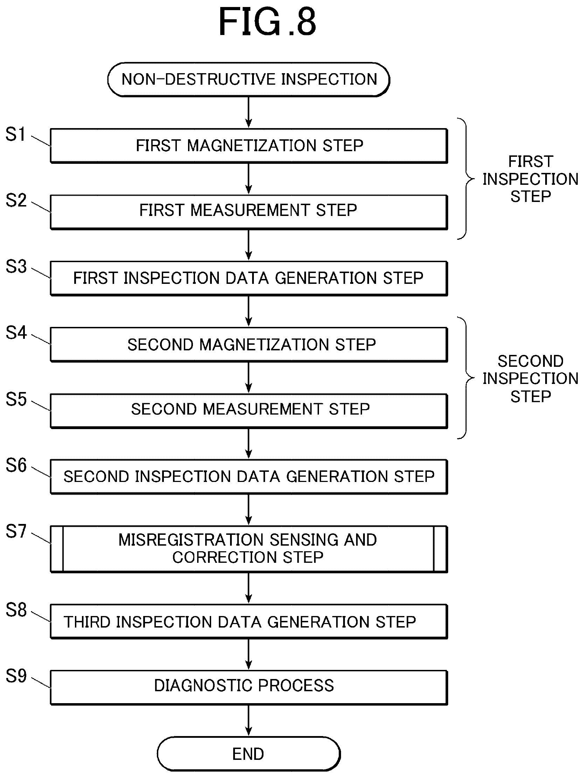

A non-destructive inspection flow by the leakage flux method of the present embodiment will be described with reference to FIG. 8. This is a case in which the non-destructive inspection apparatus 1 having the configuration shown in FIG. 1 and FIG. 2 is used.

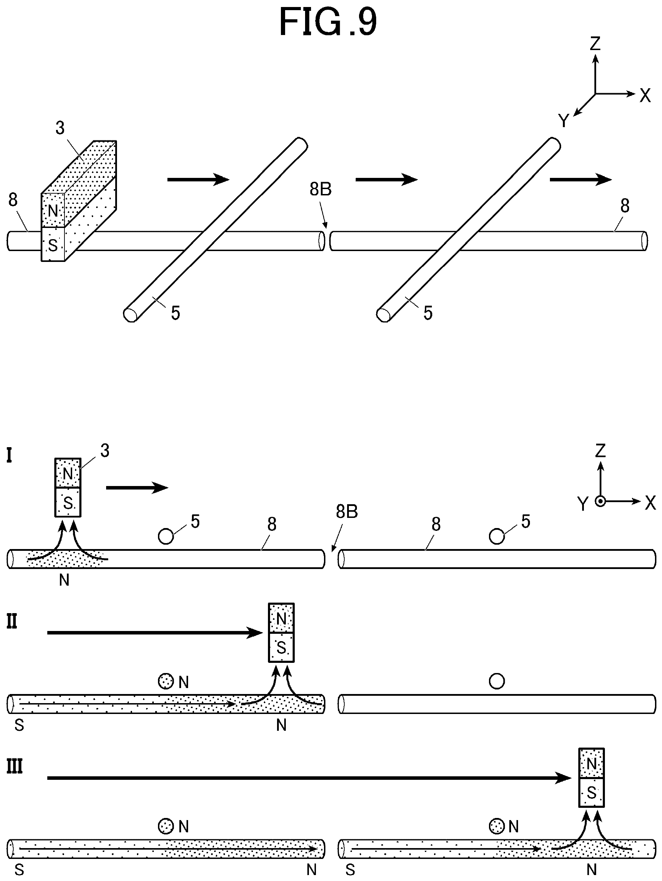

In addition, in the present embodiment, as illustrated in FIG. 9, FIG. 10, FIG. 12, and FIG. 13, it is assumed that the inspection target object 8 such as a PC steel material and the crossing reinforcing bar 5 are contained in the non-magnetic material such as concrete. In the inspection target object 8, the fracture portion 8B which is a gap about 1 cm is generated in the central portion. The crossing reinforcing bar 5 correspond to the magnetic material other than the inspection target object 8. A plurality of crossing reinforcing bars 5 are located between the front surface of the non-magnetic material on which the measurement surface 26M is provided and the inspection target object 8, extend in the Y-axis direction, and are arranged in the X-axis direction (two in FIG. 9, FIG. 10, FIG. 12, and FIG. 13). In the examples illustrated in FIG. 9, FIG. 10, FIG. 12, and FIG. 13, the non-magnetic material (concrete) around the inspection target object 8 and the crossing reinforcing bar 5 is not illustrated.

### (4. Non-Destructive Inspection Flow)

First, the user performs a first magnetization step to perform positive magnetization (step S1).

FIG. 9 shows a diagram in which the magnetic field application unit 3 is positively magnetized in the vertical arrangement.

Specifically, in the vertical arrangement in which the S pole side of the permanent magnet included in the magnetic field application unit 3 is brought close to the surface of the non-magnetic material and the N pole side is kept away from the surface of the non-magnetic material, the permanent magnet included in the magnetic field application unit 3 is moved in the X-axis positive direction while being brought into contact with the surface of the non-magnetic material.

The magnetization in the vertical arrangement is applied to a case in which a distance (fogging) from the surface (measurement surface) of the non-magnetic material containing the magnetic material as the inspection target object to the magnetic material as the inspection target object is less than a predetermined distance (for example, 7 cm). This is because, in a case in which the fogging is less than the predetermined length (e.g., 7 cm), when the magnetization in the horizontal arrangement is applied in such case, the magnetization is erroneously erased by a later-stream magnetic force of the magnet.

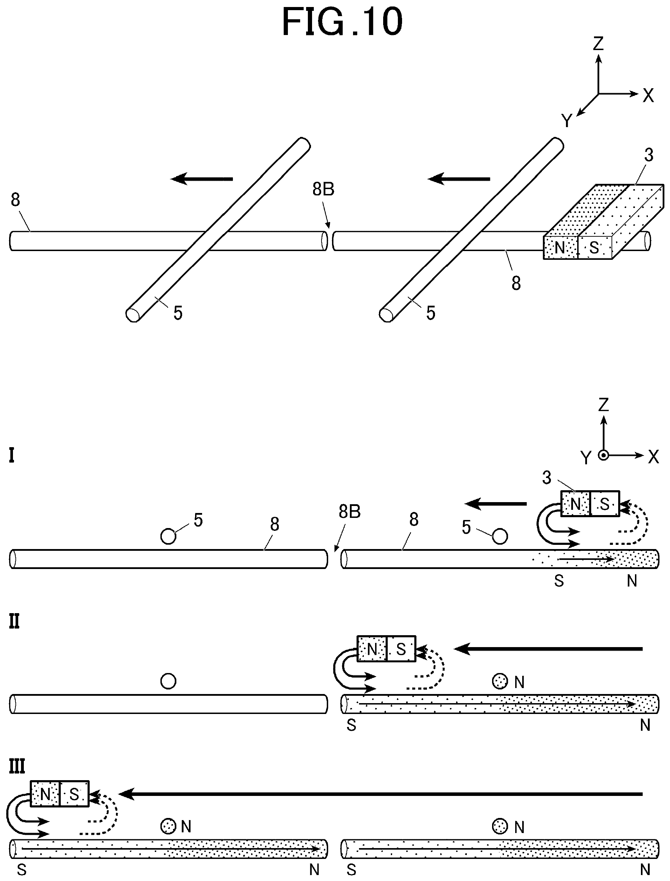

FIG. 10 shows a diagram in which the magnetic field application unit 3 is positively magnetized in the horizontal arrangement.

Specifically, the permanent magnet included in the magnetic field application unit 3 is moved in the X-axis negative direction while being brought into contact with the surface of the non-magnetic material in the horizontal arrangement in which both magnetic poles of the S pole and the N pole of the permanent magnet included in the magnetic field application unit 3 are along the extending direction (X-axis direction) of the inspection target object 8 and the S pole is positioned on the X-axis direction positive side.

The magnetization with the horizontal arrangement is applied when the amount of fog is greater than or equal to a predetermined distance (e.g., 7 cm). This is because, in a case in which the fogging is a predetermined amount (e.g., a 7 cm) or more, the magnetization in the horizontal arrangement is more efficient than the magnetization in the vertical arrangement.

When the positive magnetization is performed in the vertical arrangement shown in FIG. 9 or the horizontal arrangement shown in FIG. 10, the inspection target object 8 positioned on the negative side in the X-axis direction and the inspection target object 8 positioned on the positive side in the X-axis direction are magnetized to the N pole on the positive side in the X-axis direction and to the S pole on the negative side in the X-axis direction with the fracture portion 8B as the origin position. The crossing reinforcing bar 5 is magnetized to the N pole.

Next, the user brings the measurement surface 26M of the sensor unit 2 into contact with the surface of the non-magnetic material. Next, the sensor unit 2 performs a first measurement step of measuring, with the magnetic sensor 21, the leakage flux distribution from the inspection target object 8 and the crossing reinforcing bar 5 magnetized in step S1 (step S2).

The sensor unit 2 generates the main data which is a measurement value group of each measurement position by the main sensor 21M and the reference data which is a measurement value group of each measurement position by the reference sensor 21R based on the measurement result of the magnetic sensor 21. Then, the sensor unit 2 transmits the generated main data and reference data to the cloud computer 9.

The first magnetization step of step S1 and the first measurement step of step S2 are a first inspection step.

Next, the cloud computer 9 performs a first inspection data generation step in which first inspection data is generated (step S3). Here, the cloud computer 9 functions as a first inspection data generator.

Specifically, the cloud computer 9 receives the main data and the reference data from the sensor unit 2. Then, the cloud computer 9 generates the first inspection data by subtracting the reference data from the main data.

When the sensor unit 2 having the configuration illustrated in FIG. 2 is used, the cloud computer 9 subtracts the value measured by the sensor line 6 mounted on the substrate 21MB from the value measured by the sensor line 1 mounted on the substrate 21RB. Further, the measurement value by the sensor line 7 mounted on the substrate 21RB is subtracted from the measurement value by the sensor line 2 mounted on the substrate 21MB. In addition, the value measured by the sensor line 8 mounted on the substrate 21RB is subtracted from the value measured by the sensor line 3 mounted on the substrate 21MB. In addition, the value measured by the sensor line 9 mounted on the substrate 21RB is subtracted from the value measured by the sensor line 4 mounted on the substrate 21MB. In addition, the value measured by the sensor line 10 mounted on the substrate 21RB is subtracted from the value measured by the sensor line 5 mounted on the substrate 21MB.

Thus, the influence of the environment such as a magnetic field of the earth can be eliminated from the first inspection data.

Hereinafter, the value obtained by subtracting the measured value by the sensor line 6 from the measured value by the sensor line 1 is expressed as the value of line (1-6), the value obtained by subtracting the measured value by the sensor line 7 from the measured value by the sensor line 2 is expressed as the value of line (2-7), the value obtained by subtracting the measured value by the sensor line 8 from the measured value by the sensor line 3 is expressed as the value of line (3-8), the value obtained by subtracting the measured value by the sensor line 9 from the measured value by the sensor line 4 is expressed as the value of line (4-9), and the value obtained by subtracting the measured value by the sensor line 10 from the measured value by the sensor line 5 is expressed as the value of line (5-10).

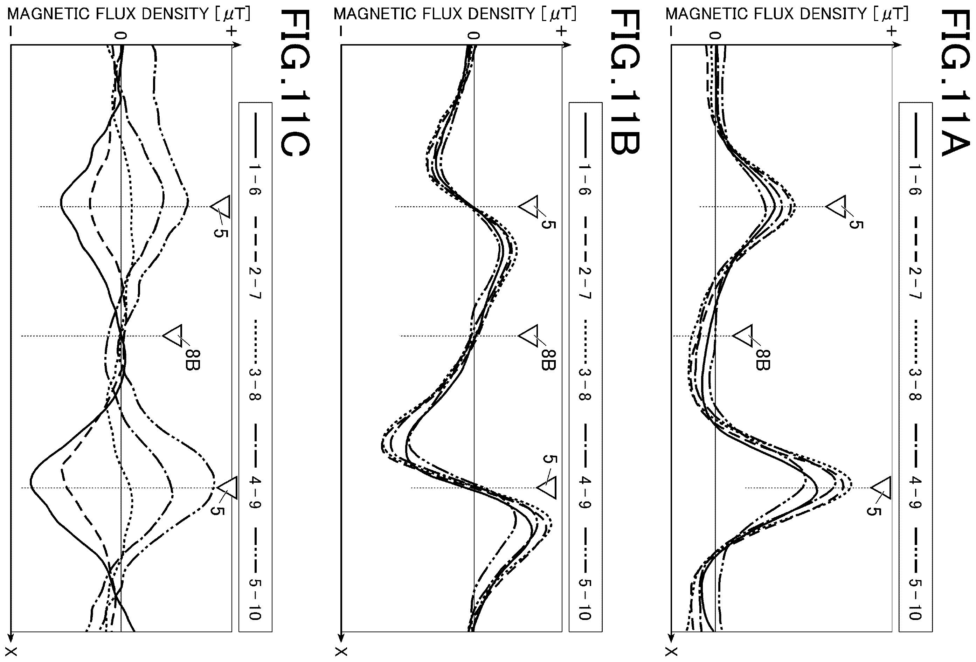

FIG. 11A to FIG. 11C illustrate examples of waveform diagrams of the first inspection data along the X-axis direction. Furthermore, FIG. 11A to FIG. 11C illustrate a case in which measurement is performed at a position where the sensor line 3 mounted on the substrate 21MB and the sensor line 8 mounted on the substrate 21RB are located at the center of the inspection target object 8 in the Y-axis direction.

A waveform diagram of the Z-axis direction component of the first inspection data is illustrated in FIG. 11A.

As illustrated in the FIG. 11A, in the waveforms of the Z-axis direction components, upward convex waveforms centering on the crossing reinforcing bar 5 are generated in the vicinity of the crossing reinforcing bar 5. Further, as described above, the inverted S-shaped waveform is generated in the vicinity of the fracture portion 8B, but is difficult to see due to the influence of the leakage magnetic flux from the crossing reinforcing bar 5.

FIG. 11B shows a waveform diagram of the X-axis direction components of the first inspection data.

As illustrated in FIG. 11B, in the waveform of the X-axis direction components, an S-shaped waveform occurs in the vicinity of the crossing reinforcing bar 5. In addition, as described above, although an upwardly convex waveform centering on the fracture portion 8B is generated in the vicinity of the fracture portion 8B, the waveform is less likely to be seen due to an influence of the leakage magnetic flux from the crossing reinforcing bar 5.

FIG. 11C shows a waveform diagram of the Y-axis direction components of the first inspection data.

As shown in FIG. 11C, among the waveforms of the Y-axis direction components, the waveform of the line (1-6) and the waveform of the line (2-7) are convex downward with the crossing reinforcing bar 5 as the center in the vicinity of the crossing reinforcing bar 5. The waveform of the line (4-9) and the waveform of the line (5-10) are convex upward with the crossing reinforcing bar 5 as the center in the vicinity of the crossing reinforcing bar 5.

Next, the user performs a second magnetization step of to perform reverse magnetization (step S4).

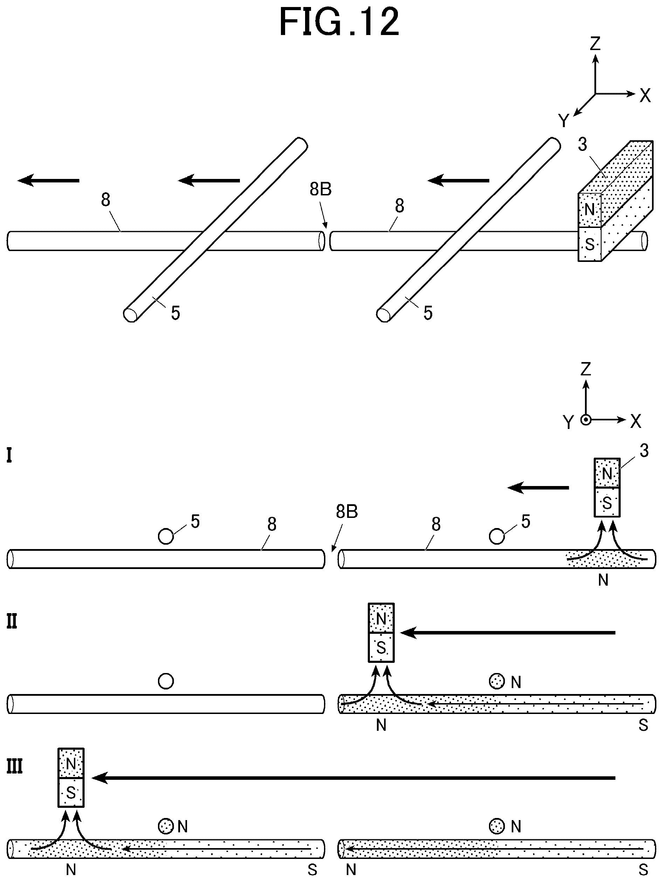

FIG. 12 shows a diagram in which the magnetic field application unit 3 is reversely magnetized in the vertical arrangement.

Specifically, in the vertical arrangement in which the S pole side of the permanent magnet included in the magnetic field application unit 3 is brought close to the surface of the non-magnetic material and the N pole side is kept away from the surface of the non-magnetic material, the permanent magnet included in the magnetic field application unit 3 is moved in the X-axis negative direction while being brought into contact with the surface of the non-magnetic material.

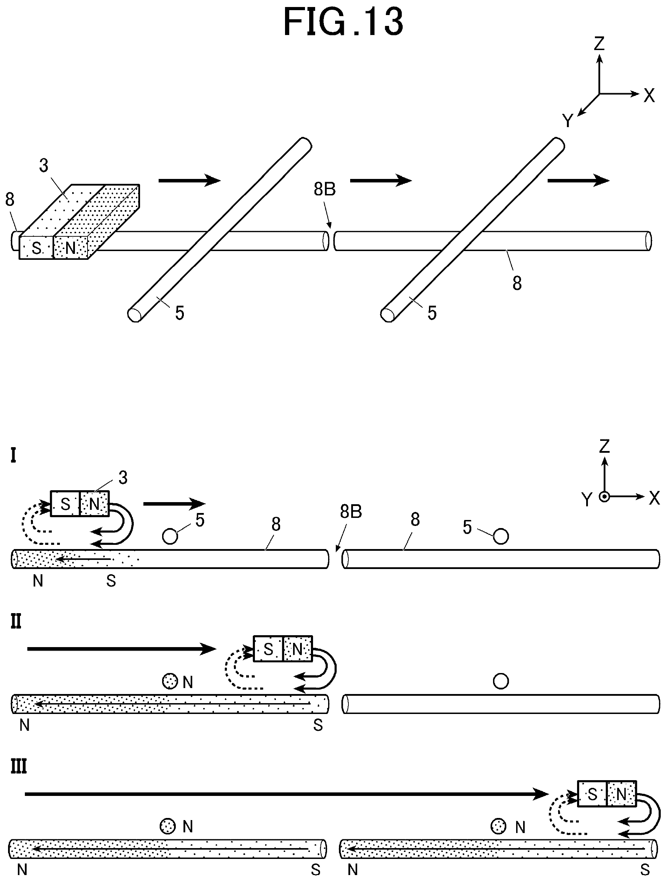

FIG. 13 shows a diagram in which the magnetic field application unit 3 is reversely magnetized in the horizontal arrangement.

Specifically, the permanent magnet included in the magnetic field application unit 3 is moved in the X-axis positive direction while being brought into contact with the surface of the non-magnetic material in the horizontal arrangement in which both magnetic poles of the S pole and the N pole of the permanent magnet included in the magnetic field application unit 3 are along the extending direction (X-axis direction) of the inspection target object 8 and the S pole is positioned on the X-axis direction negative side.

When the reverse magnetization is performed in the vertical arrangement shown in FIG. 12 or the horizontal arrangement shown in FIG. 13, the inspection target object 8 positioned on the negative side in the X-axis direction and the inspection target object 8 positioned on the positive side in the X-axis direction are magnetized to the N pole on the negative side in the X-axis direction and to the S pole on the positive side in the X-axis direction with the fracture portion 8B as the origin position. The crossing reinforcing bar 5 is magnetized to the N pole. That is, in the second magnetization step, the inspection target object 8 is magnetized such that the S pole and the N pole are in the direction opposite to those in the first magnetization step.

Next, the user brings the measurement surface 26M of the sensor unit 2 into contact with the surface of the non-magnetic material. Next, the sensor unit 2 performs a second measurement step of measuring, with the magnetic sensor 21, the leakage flux distribution from the inspection target object 8 and the crossing reinforcing bar 5 magnetized in step S4 (step S5).

Similarly to the first measurement step, the sensor unit 2 generates the main data and the reference data, and transmits the data to the cloud computer 9.

The second magnetization step of step S4 and the second measurement step of step S5 are a second inspection step.

Next, the cloud computer 9 performs a second inspection data generation step in which second inspection data is generated (step S6). Here, the cloud computer 9 functions as a second inspection data generator.

Specifically, similarly to the first inspection data generation step, the cloud computer 9 generates the second inspection data by subtracting the reference data generated based on the measurement result of the second measurement step from the main data generated based on the measurement result of the second measurement step.

That is, the first inspection data and the second inspection data are values obtained by subtracting the measurement result by the magnetic sensor 21 (the reference sensor 21R) on the side far from the inspection target object 8 from the measurement result by the magnetic sensor 21 (the main sensor 21M) on the side close to the inspection target object 8.

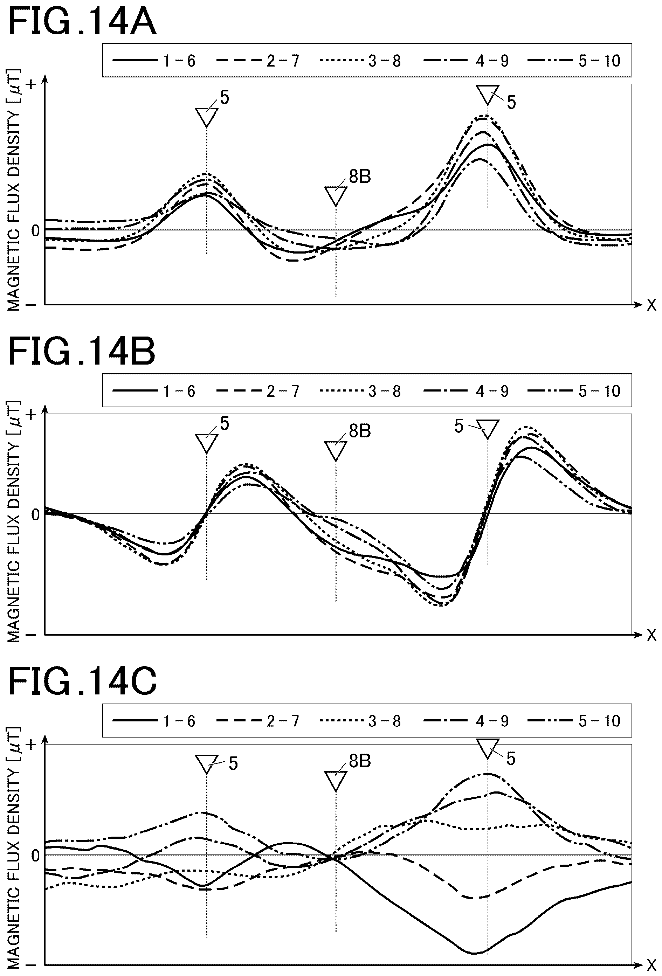

FIG. 14A to FIG. 14C illustrate example waveform diagrams of the second inspection data along the X-axis direction. Furthermore, FIG. 14A to FIG. 14C illustrate a case in which measurement is performed at a position where the sensor line 3 mounted on the substrate 21MB and the sensor line 8 mounted on the substrate 21RB are located at the center of the inspection target object 8 in the Y-axis direction.

A waveform diagram of the Z-axis direction components of the second inspection data is illustrated in FIG. 14A.

As illustrated in the FIG. 14A, in the waveforms of the Z-axis direction components, upward convex waveforms centering on the crossing reinforcing bar 5 are generated in the vicinity of the crossing reinforcing bar 5. Further, although an S-shaped waveform is generated in the vicinity of the fracture portion 8B, it is difficult to see due to the influence of the leakage magnetic flux from the crossing reinforcing bar 5.

FIG. 14B shows a waveform diagram of the X-axis direction components of the second inspection data.

As illustrated in FIG. 14B, in the waveform of the X-axis direction components, the S-shaped waveform occurs in the vicinity of the crossing reinforcing bar 5. In addition, in the vicinity of the fracture portion 8B, a downward convex waveform is generated with the fracture portion 8B as the center, but it is difficult to see due to the influence of the leakage magnetic flux from the crossing reinforcing bar 5.

FIG. 14C shows a waveform diagram of the Y-axis direction components of the second inspection data.

As shown in FIG. 14C, among the waveforms of the Y-axis direction components, the waveform of the line (1-6) and the waveform of the line (2-7) are convex downward with the crossing reinforcing bar 5 as the center in the vicinity of the crossing reinforcing bar 5. The waveform of the line (4-9) and the waveform of the line (5-10) are convex upward with the crossing reinforcing bar 5 as the center in the vicinity of the crossing reinforcing bar 5.

The cloud computer 9 may use the main data generated based on the measurement result of the first measurement step as the first inspection data, and may use the main data generated based on the measurement result of the second measurement step as the second inspection data. However, as described above, it is preferable to generate the inspection data by subtracting the reference data from the main data because the influence of the environment can be eliminated.

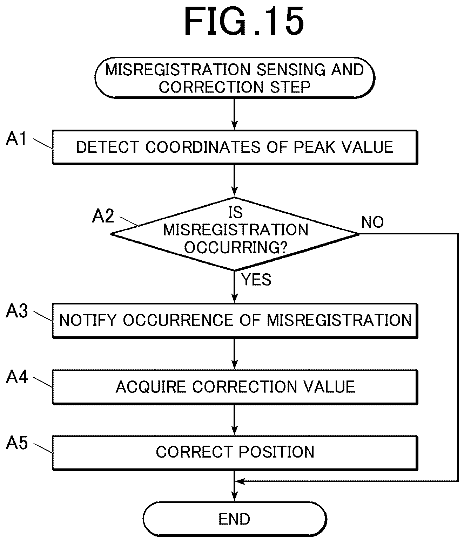

Next, the cloud computer 9 performs a misregistration sensing and correction step shown in FIG. 15 based on the first inspection data generated in step S3 and the second inspection data generated in step S6 (step S7).

### (Misregistration Sensing and Correction Step)

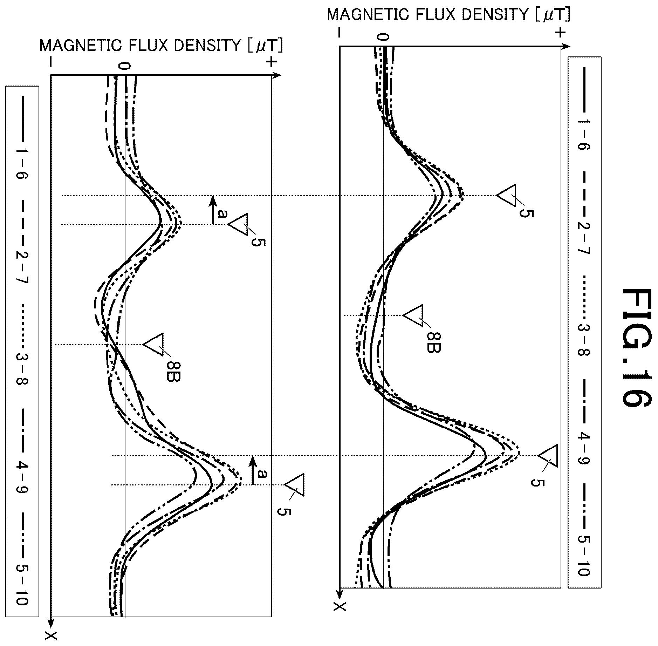

FIG. 16 illustrates a state in which the waveform diagram of the Z-axis direction components of the first inspection data and the waveform diagram of the Z-axis direction components of the second inspection data are shifted from each other by a shift amount a in the X-axis direction.

First, the cloud computer 9 performs a coordinate detection step of detecting coordinates corresponding to peak values of upward convex waveforms from the waveform diagram of the Z-axis direction components of the first inspection data and the waveform diagram of the Z-axis direction components of the second inspection data (step A1). That is, the cloud computer 9 detects, based on the first inspection data, the coordinates in the extending direction of the inspection target object 8 in the magnetic field originating from the magnetic material (the crossing reinforcing bars 5) that crosses the inspection target object 8 and that is other than the inspection target object 8. Next, the cloud computer 9 detects, based on the second inspection data, the coordinates in the extending direction of the inspection target object 8 in the magnetic field derived from the magnetic material other than the inspection target object 8.

Note that the coordinates to be detected in step A1 are not limited thereto. It is sufficient that the coordinates be such that a misregistration can be sensed in step A2.

Next, the cloud computer 9 performs a misregistration sensing process of determining, based on the coordinates detected in step A1, whether or not a misregistration occurs between the first inspection data and the second inspection data (step A2).

Specifically, the cloud computer 9 determines that a misregistration has occurred if a misregistration amount of the misregistration is a predetermined threshold or more. In the example shown in FIG. 16, the misregistration amount is the shift amount a. The predetermined threshold is set in advance. That is, when the difference between the coordinates of the first inspection data and the coordinates of the second inspection data detected in the coordinate detection step is equal to or greater than a predetermined threshold value, the cloud computer 9 senses that there is the misregistration between the inspection positions in the first inspection step and the second inspection step.

If the misregistration has occurred (step A2; YES), the cloud computer 9 executes a notification step of providing a notification by causing the portable computer 4 to display a warning to show that the misregistration has occurred (step A3).

Next, the cloud computer 9 executes a correction value acquiring step of acquiring the misregistration amount as a correction value (step A4). That is, the cloud computer 9 acquires the difference between the coordinates of the first inspection data and the coordinates of the second inspection data detected in the coordinate detection step as the correction value.

Next, the cloud computer 9 performs, based on the correction values acquired in step A4, a position correction step of correcting the position of the first inspection data or the second inspection data such that the misregistration is eliminated (step A5), and ends the present processing. That is, the cloud computer 9 performs correction so that the coordinates of the first inspection data and the coordinates of the second inspection data coincide with each other based on the correction value acquired in the correction value acquiring step.

On the other hand, in a case where the misregistration does not occur (step A2; NO), the cloud computer 9 ends the present process.

As described above, by performing the misregistration sensing and correction step, there is no misregistration between the first inspection data and the second inspection data, and it is possible to cancel the influence of the crossing reinforcing bar 5 in a third inspection data generation step of step S8 to be described later.

Returning to FIG. 8, the cloud computer 9 performs the third inspection data generation step of generating third inspection data that is calculation reconstruction data (step S8). Here, the cloud computer 9 functions as a third inspection data generator.

In the third inspection data generation step, the cloud computer 9 executes at least one of reduction of a noise magnetic field component other than the magnetic field component derived from the inspection target object 8 and enhancement of the magnetic field component derived from the inspection target object 8 on the basis of the first inspection data and the second inspection data. That is, the cloud computer 9 executes processing for eliciting the magnetic field component derived from the inspection target object 8.

Specifically, the cloud computer 9 generates third inspection data by subtracting the second inspection data from the first inspection data.

By subtracting the second inspection data from the first inspection data, the magnetic field component from the crossing reinforcing bars 5 magnetized to the N pole in the first magnetization step and the magnetic field component from the crossing reinforcing bars 5 magnetized to the N pole in the second magnetization step can be cancelled out. Further, the magnetic field component of the inspection target object 8 magnetized in the opposite direction in the first inspection step and the second inspection step can be doubled.

Next, the cloud computer 9 creates a display image based on the third inspection data generated in step S8, and displays the display image on the portable computer 4 or the like. The user refers to the image for display, performs a diagnostic step of diagnosing the inspection target object 8 (step S9), and ends the non-destructive inspection. Here, the cloud computer 9 functions as a display controller.

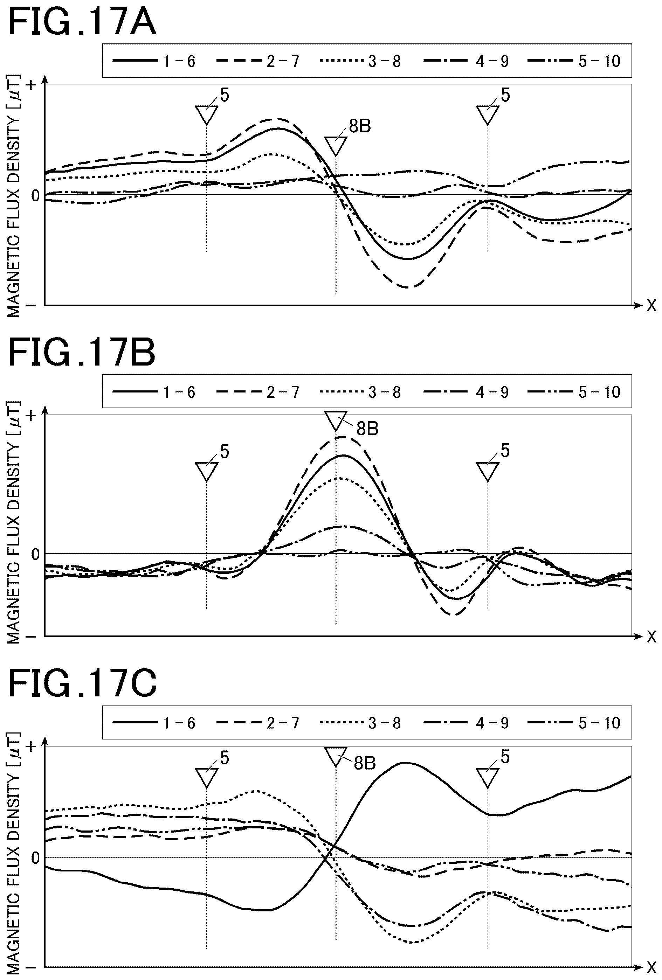

FIG. 17A to FIG. 17C illustrate example waveform diagrams of the third inspection data along the X-axis direction. Furthermore, FIG. 17A to FIG. 17C illustrate a case in which measurement is performed at a position where the fractured inspection target object 8 is arranged at a position between the sensor line 1 and the sensor line 2 mounted on the substrate 21MB and at a position where the non-fractured inspection target object 8 is arranged at a position between the sensor line 4 and the sensor line 5.

A waveform diagram of the Z-axis direction components of the third inspection data is shown in FIG. 17A.

As illustrated in FIG. 17A, among the waveforms of the Z-axis direction components, the waveform of the line (1-6), the waveform of the line (2-7), and the waveform of the line (3-8) are changed to be downward to the right in the vicinity of the fracture portion 8B, and the inverted S-shaped waveform is generated. Furthermore, the part sloping downward to the right is located near the magnetic flux density of substantially zero.

From the above, a position at which the waveform of the Z-axis direction component of the third inspection data changes from a positive value to a negative value in the X-axis positive direction can be determined as the fracture position.

FIG. 17B shows a waveform diagram of the X-axis direction components of the third inspection data.

As illustrated in FIG. 17B, in the waveform of the X-axis direction components, an upwardly convex waveform centering on the fracture portion 8B is generated in the vicinity of the fracture portion 8B.

From the above, the position of an inflection point peak that is convex upward in the waveform of the X-axis direction component of the third inspection data can be determined as the fracture position.

A waveform diagram of the Y-axis direction components of the third inspection data is illustrated in FIG. 17C.

As illustrated in FIG. 17C, among the waveforms of the Y-axis direction components, the waveform of the line (1-6) changes upward to the right in the vicinity of the fracture portion 8B, and the S-shaped waveform is generated. The waveform of the line (3-8) changes downward to the right in the vicinity of the fracture portion 8B, and the inverted S-shaped waveform is generated. Then, the waveform of the line (1-6) and the waveform of the line (3-8) intersect with each other near the magnetic flux density zero value in the vicinity of the fracture portion 8B.

As described above, the position at which the S-shaped waveform and the inverted S-shaped waveform intersect each other in the waveform of the Y-axis direction component of the third inspection data in the region of the predetermined range in the vicinity of the magnetic flux density zero value can be determined to be the fracture position.

As illustrated in FIG. 17A to FIG. 17C, in the third inspection data, the magnetic field components derived from the inspection target object 8 can be manifested by canceling out the magnetic field components derived from the crossing reinforcing bars 5 and doubling the magnetic field components derived from the inspection target object 8. Therefore, the position of the fracture portion 8B of the inspection target object 8 can be clarified.

As described above, the first inspection data, the second inspection data, and the third inspection data include inspection data for each of the three axial directions (the extending direction of the inspection target object 8, the first direction orthogonal to the extending direction, and the second direction orthogonal to the extending direction and the first direction) for each inspection coordinates of the magnetic sensor 21.

In the non-destructive inspection, the first inspection data is generated by subtracting the reference data from the main data in the first inspection data generation step. Similarly, in the second data generation step, the second inspection data is generated by subtracting the reference data from the main data. Then, in the third inspection data generation step, the third inspection data is generated by subtracting the second inspection data from the first inspection data.

However, the third inspection data may be generated as follows. First, differential main data is generated by subtracting the main data of the second inspection step from the main data of the first inspection step. Similarly, differential reference data is generated by subtracting the reference data of the second inspection step from the reference data of the first inspection step. Next, the differential reference data is subtracted from the differential main data to generate the third inspection data.

The first inspection data generation step, the second inspection data generation step, the misregistration sensing and correction step, and the third inspection data generation step may be performed by the CPU 24 of the sensor unit 2. In this case, the CPU 24 functions as the first inspection data generator, the second inspection data generator, the coordinate detector, the misregistration sensor, the correction value acquisition section, the position correcting section, and the third inspection data generator.

In this case, the sensor unit 2 transmits the generated third inspection data to the cloud computer 9.

When a target with an area larger than the entire measurement surface of the magnetic sensor 21 is inspected, the above steps S1 and S9 are repeatedly executed.

### (5. Modification Example)

### (Modification Example 1)

Next, modification example 1 of the embodiment will be described.

Hereinafter, differences from the above embodiment will be mainly described.

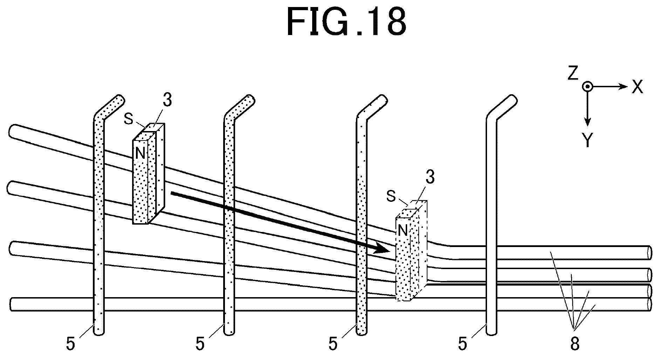

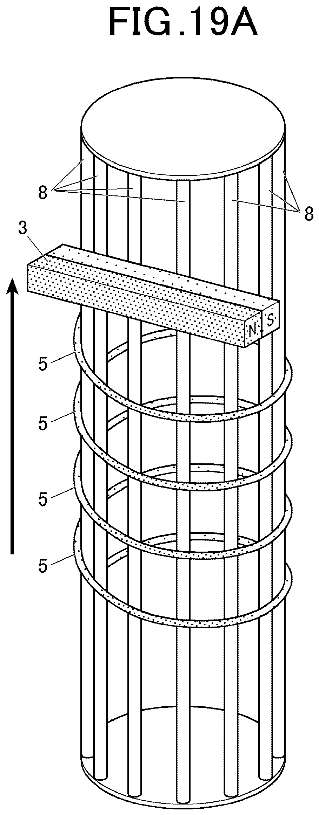

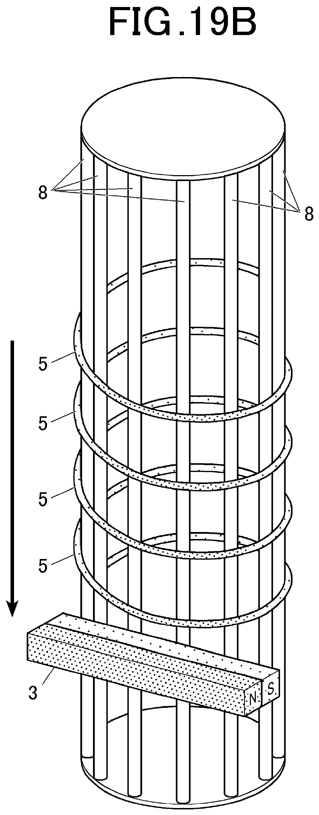

FIG. 18, FIG. 19A, and FIG. 19B show an example in which the inspection target object 8 such as the PC steel and the crossing reinforcing bar 5 are contained in the non-magnetic material such as concrete, and the inspection target object 8 and the crossing reinforcing bar 5 obliquely cross each other. In the example illustrated in FIG. 18, FIG. 19A, and FIG. 19B, the non-magnetic material (concrete) around the inspection target object 8 and the crossing reinforcing bar 5 is not illustrated.

In the first magnetization step and the second magnetization step of the non-destructive inspection, as shown in FIG. 18, FIG. 19A, and FIG. 19B, a case in which the inspection target object 8 and the crossing reinforcing bar 5 which obliquely cross each other are magnetized will be described.

FIG. 18 shows an example in which the inspection target object 8 and the crossing reinforcing bar 5 obliquely cross each other are positively magnetized in the first magnetization step.

FIG. 19A and FIG. 19B illustrate an example in which a concrete pole having a spiral reinforcement as the crossing reinforcing bar 5 is magnetized. FIG. 19A is an example of performing the positive magnetization in the first inspection step, and FIG. 19B is an example of performing the reverse magnetization in the second inspection step.

As illustrated in FIG. 18, FIG. 19A and FIG. 19B, in a case in which the inspection target object 8 and the crossing reinforcing bar 5 obliquely cross each other, the magnetization is performed by moving the magnetic field application unit 3 in the extending direction of the inspection target object 8 while maintaining the permanent magnet included in the magnetic field application unit 3 and the crossing reinforcing bar 5 to be parallel to each other.

Thus, the crossing reinforcing bar 5 can be uniformly magnetized.

When the reverse magnetization is performed in the second magnetization step, the magnetization is performed by moving the magnetic field application unit 3 while maintaining the same angle as that in the first magnetization step with respect to the inspection target object 8 and the crossing reinforcing bar 5.

As a result, the magnetization amounts of the crossing reinforcing bar 5 in the positive magnetization and the reverse magnetization are substantially the same, and the influence of the crossing reinforcing bar 5 can be canceled when the third inspection data is generated.

In the examples shown in FIG. 18, FIG. 19A, and FIG. 19B, the magnetization is performed in the vertical arrangement in which the S pole side of the permanent magnet included in the magnetic field application unit 3 is close to the surface of the non-magnetic material, and the N pole side is away from the surface of the non-magnetic material. However, the magnetization may be performed in the vertical arrangement in which the N pole side of the permanent magnet included in the magnetic field application unit 3 is close to the surface of the non-magnetic material and the S pole side is far from the surface of the non-magnetic material.

As described above, in the first magnetization step, the edge of the permanent magnet included in the magnetic field application unit 3 on the S pole side or the N pole side is moved in a state of maintaining a right angle or a predetermined angle with respect to the extending direction of the inspection target object 8.

Further, in the second magnetization step, the edge of the permanent magnet included in the magnetic field application unit 3 on the side brought into contact in the first magnetization step is moved with respect to the extending direction of the inspection target object 8 while maintaining the same angle as the installation angle of the permanent magnet included in the magnetic field application unit 3 in the first magnetization step.

Further, in the first magnetization step and the second magnetization step, the permanent magnet included in the magnetic field application unit 3 is moved in the extending direction of the inspection target object 8 in a state where the permanent magnet is maintained parallel to the crossing reinforcing bar 5.

### (Modification Example 2)

Next, modification example 2 of the embodiment will be described.

Hereinafter, differences from the above embodiment will be mainly described.

In the non-destructive inspection of the present modification example, in a case in which a target having a larger area than the entire measurement surface by the magnetic sensor 21 is inspected, after the first inspection step and the first inspection data generation step of the plurality of measurement surfaces are collectively performed, the second inspection step and the second inspection data generation step of the plurality of measurement surfaces are collectively performed.

Thus, non-destructive inspection can be efficiently performed.

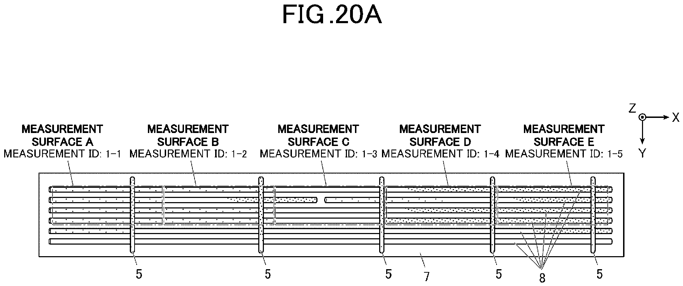

FIG. 20A shows a case in which the first inspection step of a plurality of measurement surfaces is performed.

In FIG. 20A, the inspection target object 8 such as the PC steel material and the crossing reinforcing bar 5 are contained in the non-magnetic material 7 such as concrete.

In the first magnetization step of the non-destructive inspection of the present modification example, the user positively magnetizes the inspection target object 8 and the crossing reinforcing bars 5 collectively in the measurement surface A to the measurement surface E.

Next, in the first measurement step, the user causes the measurement surface 26M of the sensor unit 2 to come into contact with the measurement surface A. Then, the sensor unit 2 measures the leakage flux distribution from the magnetized inspection target object 8 and the crossing reinforcing bar 5 by the magnetic sensor 21. The sensor unit 2 then transmits the main data and the reference data generated based on the measurement result of the magnetic sensor 21 to the cloud computer 9.

Then, as the first inspection data generation step, the cloud computer 9 generates the first inspection data from the main data and the reference data.

Then, the cloud computer 9 performs a first inspection data identification step of assigning identification information (for example, measurement ID) to the first inspection data.

Similarly, the measurement by the magnetic sensor 21, the generation of the first inspection data, and the provision of the identification information are performed on the measurement surface B to the measurement surface E in this order.

As shown in FIG. 20A, it is assumed that the cloud computer 9 assigns "measurement ID:1-1" as the identification information to the first inspection data of the measurement surface A. Similarly, it is assumed that "measurement ID: 1-2" is assigned to the first inspection data of the measurement surface B, "measurement ID: 1-3" is assigned to the first inspection data of the measurement surface C, "measurement ID: 1-4" is assigned to the first inspection data of the measurement surface D, and "measurement ID:1-5" is assigned to the first inspection data of the measurement surface E.

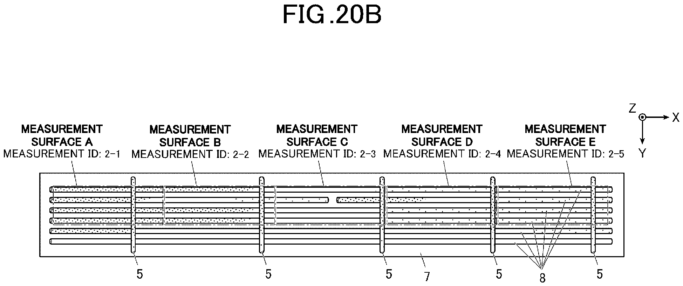

FIG. 20B illustrates the case of performing the second inspection step for a plurality of measurement surfaces. The measurement surface A illustrated in FIG. 20B is the measurement surface A illustrated in FIG. 20A, and the same applies to the measurement surfaces B to E.

In FIG. 20B, similarly to FIG. 20A, an inspection target object 8 such as the PC steel and the crossing reinforcing bar 5 are contained in the non-magnetic material 7 such as concrete.

In the second magnetization step, the user reversely magnetizes the inspection target object 8 and the crossing reinforcing bar 5 together on the measurement surface A to the measurement surface E.

Next, similarly to the first inspection step, the measurement by the magnetic sensor 21, the generation of the second inspection data by the cloud computer 9, and the provision of the identification information (second inspection data identification step) are performed on the measurement surface A to the measurement surface E in this order.

As shown in FIG. 20B, it is assumed that the cloud computer 9 assigns "measurement ID:2-1" as identification information to the second inspection data of the measurement surface A. Similarly, it is assumed that "measurement ID:2-2" is assigned to the second inspection data of the measurement surface B, "measurement ID:2-3" is assigned to the second inspection data of the measurement surface C, "measurement ID:2-4" is assigned to the second inspection data of the measurement surface D, and "measurement ID:2-5" is assigned to the second inspection data of the measurement surface E.

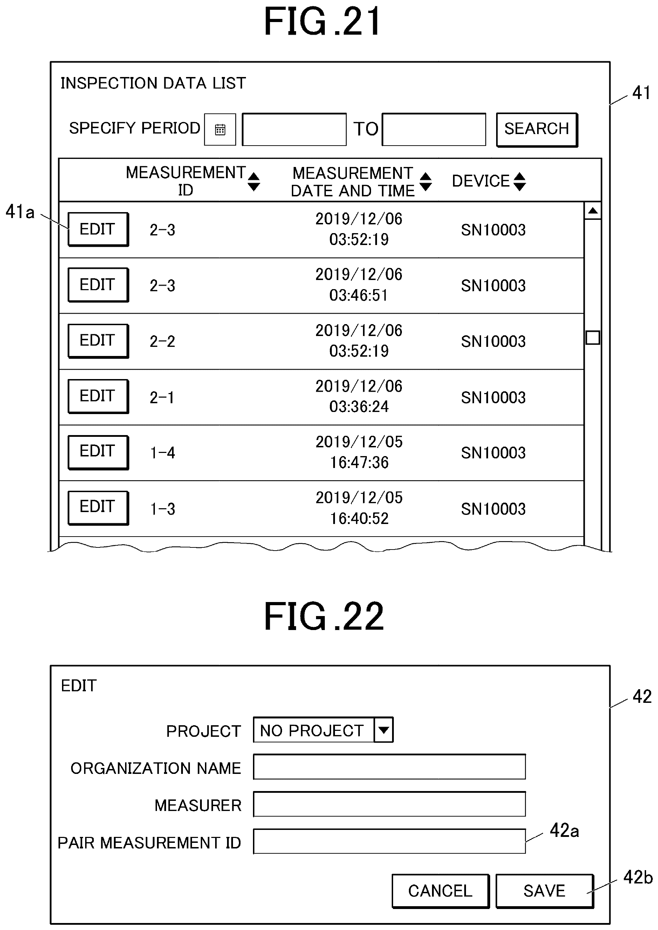

Further, the cloud computer 9 causes the portable computer 4 to display an inspection data list screen 41 shown in FIG. 21. The inspection data list is a list of the first inspection data and the second inspection data.

The cloud computer 9 displays, in the inspection data list, identification information (e.g., measurement ID) corresponding to each inspection data, the date and time of measurement, the device used for measurement, and the like.

When the user presses an edit button 41a corresponding to any inspection data in the inspection data list screen 41, the cloud computer 9 allows the portable computer 4 to display an inspection data edit screen 42 (FIG. 22) for accepting editing of information on the inspection data selected by the user.

The cloud computer 9 accepts, in the inspection data edit screen 42, input of predetermined information associated with the measurement ID of the inspection data selected by the user.

Specifically, the cloud computer 9 accepts input of the measurement ID of the inspection data to be associated as a pair with the measurement ID of the inspection data selected by the user in the pair measurement ID field 42a. When the measurement ID of one of the inspection data is input in the pair measurement ID field 42a and the save button 42b is pressed by the user, the cloud computer 9 associates the measurement ID of the inspection data selected by the user with the measurement ID input in the pair measurement ID field 42a.

Here, the user edits the inspection data such that the measurement ID of the first inspection data and the measurement ID of the second inspection data obtained by measuring the same measurement surface are associated with each other.

That is, in the example illustrated in FIG. 20A and FIG. 20B, the inspection data of "measurement ID: 1-1" and the inspection data of "measurement ID:2-1" are associated with each other. Similarly, the inspection data of "measurement ID: 1-2" and the inspection data of "measurement ID:2-2" are associated with each other. Similarly, the inspection data of "measurement ID:1-3" and the inspection data of "measurement ID:2-3" are associated with each other. Similarly, the inspection data of "measurement ID:1-4" and the inspection data of "measurement ID:2-4" are associated with each other. Similarly, the inspection data of "measurement ID: 1-5" and the inspection data of "measurement ID:2-5" are associated with each other.

That is, the cloud computer 9 performs a linkage step of associating the identification information assigned to the first inspection data with the identification information assigned to the second inspection data based on the instruction of the user.

Note that as described above, the association of the measurement ID of the inspection data is performed by the cloud computer 9, but is not limited thereto. For example, it may be implemented by the sensor unit 2.

In the third inspection data generation step, the cloud computer 9 generates the third inspection data based on the first inspection data and the second inspection data in which the measurement IDs are associated.

### (Modification Example 3)

Next, modification example 3 of the present embodiment described above will be described.

Hereinafter, differences from the above embodiment will be mainly described.

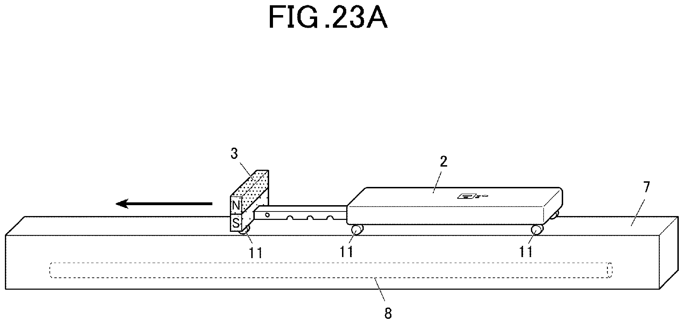

FIG. 23A illustrates an example of the first inspection step by the non-destructive inspection apparatus 1 (the sensor unit 2 and the magnetic field application unit 3) of the present modification example.

The non-destructive inspection apparatus 1 of the present modification example is configured such that the sensor unit 2 and the magnetic field application unit 3 are integrally configured at positions separated by a predetermined distance, includes wheels 11, and is configured to be able to perform scanning.

In the first inspection step (the first magnetization step and the first measurement step) of the non-destructive inspection of the present modification example, the user causes the non-destructive inspection apparatus 1 to abut on the surface of the non-magnetic material 7 containing the inspection target object 8 so that the magnetic field application unit 3 side is located on the upstream side in a movement direction, and moves the non-destructive inspection apparatus 1 in the extending direction of the inspection target object 8.

Here, the inspection target object 8 is positively magnetized by the moving magnetic field application unit 3.

The sensor unit 2 measures the leakage magnetic flux distribution from the positively magnetized inspection target object 8 while being moved on the inspection target object 8 in the extending direction of the inspection target object 8.

That is, in the first inspection step, the leakage flux distribution is measured while the magnetic sensor 21 is moved in the extending direction of the inspection target object 8 subsequent to the magnetic field application unit 3.

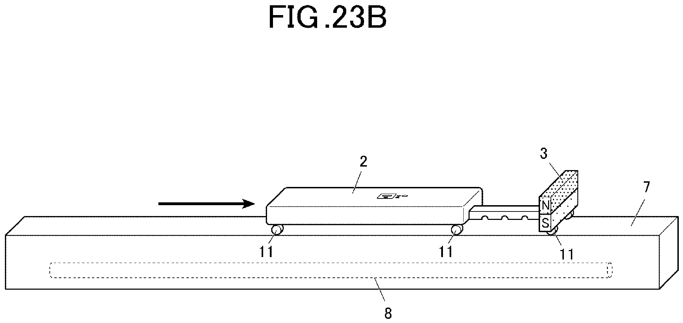

FIG. 23B illustrates an example of a second inspection step by the non-destructive inspection apparatus 1 (the sensor unit 2 and the magnetic field application unit 3) of the present modification example.

In the second inspection step (the second magnetization step and the second measurement step), the user causes the non-destructive inspection apparatus 1 to abut on the surface of the non-magnetic material 7 containing the inspection target object 8 so that the magnetic field application unit 3 side is positioned on the upstream side in the movement direction, and moves the non-destructive inspection apparatus 1 in a direction opposite to the first inspection step.

Here, the inspection target object 8 is reversely magnetized by the moving magnetic field application unit 3.

The sensor unit 2 measures the leakage magnetic flux distribution from the reversely magnetized inspection target object 8 while being moved on the inspection target object 8 in the extending direction of the inspection target object 8.

That is, in the second inspection step, the leakage flux distribution is measured while the magnetic sensor 21 is moved in the extending direction of the inspection target object 8 in the direction opposite of the first inspection step subsequent to the magnetic field application unit 3.

In the third inspection data generation step of the non-destructive inspection of the present modification example, the cloud computer 9 switches the orientation of the measurement result of the magnetic sensor 21 in the first inspection data or the second inspection data. That is, the relative position of the magnetic sensor 21 is aligned between the first inspection data and the second inspection data. Next, the cloud computer 9 subtracts the second inspection data from the first inspection data in the Z-axis direction component. Furthermore, the cloud computer 9 adds the first inspection data and the second inspection data in the X-axis component and the Y-axis component. This is because, in the X-axis component and the Y-axis component, the direction of sensitivity of the magnetic sensor 21 is reversed between the first inspection data and the second inspection data.

### (Modification Example 4)

Next, modification example 4 of the present embodiment described above will be described.

Hereinafter, differences from the above embodiment will be mainly described.

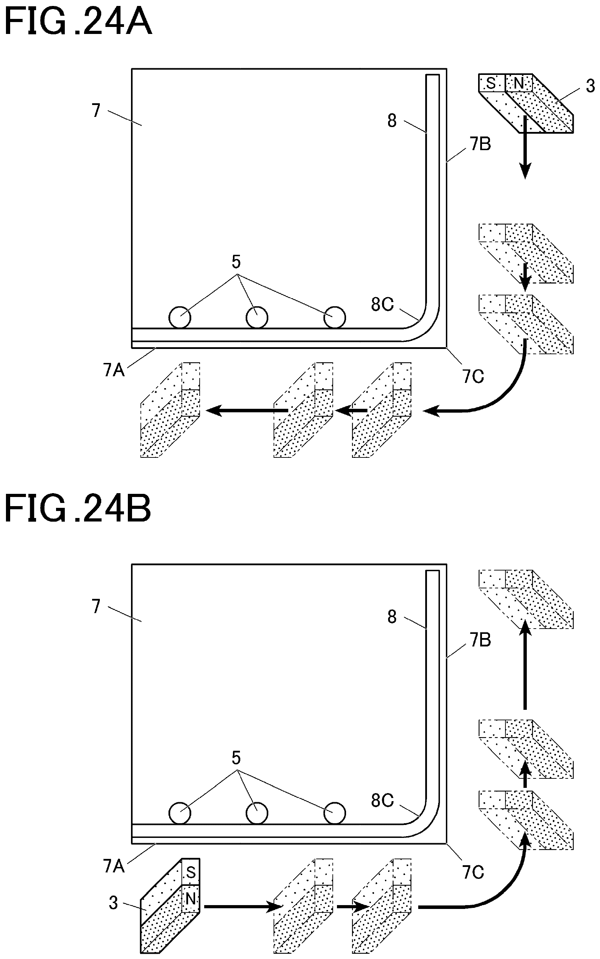

An example of the first magnetization step in the present modification example is illustrated in FIG. 24A. FIG. 24B shows an example of the second magnetization step in the present modification example.

In FIG. 24A and FIG. 24B, the inspection target object 8 such as the reinforcing bar and the crossing reinforcing bar 5 are contained in the non-magnetic material 7 such as concrete. As shown in FIG. 24A and FIG. 24B, the inspection target object 8 of the present modification example is a bent reinforcing bar having a bending portion 8C which is bent at 90 degrees. The surfaces of the non-magnetic material 7 include two faces (a first face 7A and a second face 7B) with the bending portion 7C together with the bending portion 8C of the inspection target object 8 as a boundary.

In the first magnetization step of the non-destructive inspection of the present modification example, the user arranges the permanent magnet included in the magnetic field application unit 3 in the vertical arrangement in which the S pole side is brought close to the surface of the non-magnetic material 7 and the N pole side is separated from the surface of the non-magnetic material 7. Then, the user continuously moves the permanent magnet included in the magnetic field application unit 3 from the second face 7B to the first face 7A along the extending direction of the inspection target object 8 while bringing the permanent magnet into contact with the surfaces of the non-magnetic material 7. The user rotates the magnetic field application unit 3 by 90 degrees at the bending portion 7C.

Further, in the second magnetization step of the non-destructive inspection of the present modification example, the user arranges the magnetic field application unit 3 in the vertical arrangement similar to the first magnetization step. Then, the user continuously moves the permanent magnet included in the magnetic field application unit 3 along the extending direction of the inspection target object 8 in a direction opposite to the direction of the movement in the first magnetization step (from the first face 7A to the second face 7B) while bringing the permanent magnet into contact with the surfaces of the non-magnetic material 7. As in the first magnetization step, the user rotates the magnetic field application unit 3 by 90 degrees at the bending portion 7C.

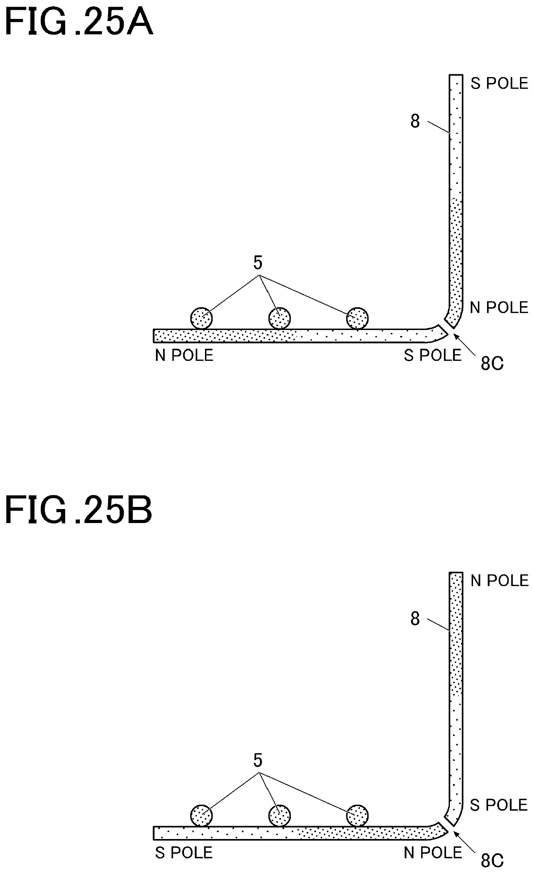

An example of the inspection target object 8 and the crossing reinforcing bar 5 positively magnetized by the first magnetization step is illustrated in FIG. 25A.

FIG. 25B illustrates an example of the inspection target object 8 and the crossing reinforcing bar 5 reversely magnetized by the second magnetization step.

In the example illustrated in FIG. 25A and FIG. 25B, it is assumed that the inspection target object 8 has a fracture at the bending portion 8C.

Further, as shown in FIG. 25A and FIG. 25B, the S pole and the N pole of the inspection target object 8 are reversed between the positive magnetization and the reverse magnetization.

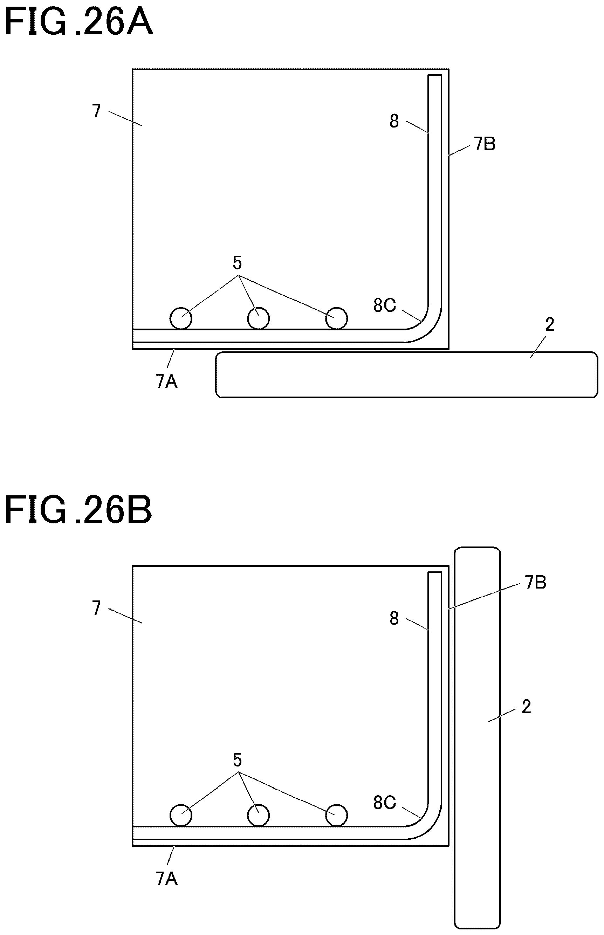

FIG. 26A shows an example of measuring the first face 7A. FIG. 26B shows an example of measuring the second face 7B.

In the first measurement step and the second measurement step of the non-destructive inspection of the present modification example, first, as shown in FIG. 26A, the user abuts the measurement surface 26M of the sensor unit 2 with the first face 7A of the non-magnetic material 7. Then, the sensor unit 2 measures the leakage flux distribution from the magnetized inspection target object 8 and the crossing reinforcing bar 5 by the magnetic sensor 21.

Next, as shown in FIG. 26B, the user abuts the measurement surface 26M of the sensor unit 2 with the second face 7B of the non-magnetic material 7. Then, the sensor unit 2 measures the leakage flux distribution from the magnetized inspection target object 8 and the crossing reinforcing bar 5 by the magnetic sensor 21.

As described above, in the non-destructive inspection method of the present modification example, in the first inspection step, the inspection target object 8 is continuously magnetized by moving the magnetic field application unit 3 along the extending direction of the inspection target object 8 in two faces (the first face 7A and the second face 7B) with the bending portion 7C of the surface of the non-magnetic material 7 as the boundary. Next, a magnetic field leaking from the magnetized inspection target object 8 to the outside of the non-magnetic material 7 is measured on each of the two faces.

Next, in the second inspection step, the magnetic field application unit 3 is moved in two faces (the first face 7A and the second face 7B) with the bending portion 7C on the surface of the non-magnetic material 7 as a boundary along the extending direction of the inspection target object 8, and the inspection target object 8 is continuously magnetized such that the S pole and the N pole are in the opposite direction to those in the first inspection step. Next, a magnetic field leaking from the magnetized inspection target object 8 to the outside of the non-magnetic material 7 is measured on each of the two faces.

### (6. Effect)

According to the above embodiment, the non-destructive inspection method of the present invention performs the non-destructive inspection method using the magnetic material contained in the non-magnetic material 7 as the inspection target object 8, and the method includes the first inspection step of applying the magnetic field generated from the magnetic field application unit 3 to the inspection target object 8 from the outside of the non-magnetic material 7 to magnetize the inspection target object 8 in the extending direction, and measuring the magnetic field leaking from the magnetized inspection target object 8 to the outside of the non-magnetic material 7 by the magnetic sensor 21, the second inspection step of measuring the magnetic field leaking from the magnetized inspection target object 8 to the outside of the non-magnetic material 7 by the magnetic sensor 21 by magnetizing the inspection target object 8 in the extending direction so that the S pole and the N pole are opposite directions to those in the first inspection step by applying the magnetic field generated from the magnetic field application unit 3 to the inspection target object 8 from the outside of the non-magnetic material 7, the third inspection data generation step of generating the third inspection data based on the first inspection data based on the measurement result of the first inspection step and the second inspection data based on the measurement result of the second inspection step, and a diagnosis step of diagnosing the inspection target object 8 based on the third inspection data, and in the third inspection data generation step, at least one of reducing the noise magnetic field component other than the magnetic field component derived from the inspection target object 8 and emphasizing the magnetic field component derived from the inspection target object 8.

Therefore, when the inspection target object has magnetic anisotropy, the magnetization direction is changed by 180 degrees between the first inspection step and the second inspection step, and thus the inspection target object can be sufficiently magnetized in at least one of the first inspection step and the second inspection step.

Furthermore, in a case in which the crossing reinforcing bar 5 that is the magnetic material other than the inspection target object 8 is contained in the non-magnetic material 7 and the crossing reinforcing bar 5 has magnetic anisotropy, the amount of magnetization of the S pole or the N pole of the crossing reinforcing bar 5 is the same in the first inspection step and the second inspection step. Therefore, the magnetic field component of the crossing reinforcing bar 5 can be cancelled out.

By using the inspection data based on the first inspection step and the second inspection step as described above, it is possible to more accurately perform the non-destructive inspection using magnetism.

In the third inspection data generation step of the non-destructive inspection method, the third inspection data is generated based on the difference between the first inspection data and the second inspection data.

Therefore, in the third inspection data, the magnetic field component derived from the crossing reinforcing bar 5 can be canceled out, and the magnetic field component derived from the inspection target object 8 can be doubled. That is, the magnetic field component derived from the inspection target object 8 can be manifested. Therefore, the position of the fractured portion 8B of the inspection target object 8 can be clarified.

Furthermore, in the non-destructive inspection method, the magnetic field application unit 3 includes a permanent magnet having the S pole and the N pole at ends, respectively, in the first inspection step and the second inspection step, the magnetic field application unit 3 is moved in the extending direction in the vertical arrangement in which the S pole side or the N pole side of the permanent magnet is brought close to the surface of the non-magnetic material 7 and the pole side opposite to the close pole is separated from the surface and the moving direction of the magnetic field application unit 3 is opposite between the first inspection step and the second inspection step.

In the method using the vertical arrangement, when the fogging is less than a predetermined distance (for example, 7 cm), the magnetization can be performed without being erroneously erased by the later-stream magnetic force of the magnet.

Furthermore, in the non-destructive inspection method, the magnetic field application unit 3 includes the permanent magnet having an S pole and an N pole at respective end portions, and in the first inspection step and the second inspection step, the magnetic field application unit 3 is moved in the extending direction in the horizontal arrangement in which the S pole side and the N pole side of the permanent magnet are along the extending direction on the surface of the non-magnetic material 7, and the movement direction of the magnetic field application unit 3 is opposite between the first inspection step and the second inspection step.

The method using the horizontal arrangement can perform magnetization more efficiently than the magnetization using the vertical arrangement in the case in which the fogging is equal to or greater than a predetermined distance (e.g., 7 cm).

Furthermore, in the first inspection step of the non-destructive inspection method, the edge having the S pole or the N pole of the permanent magnet of the magnetic field application unit 3 is moved while maintaining the right angle or the predetermined angle with respect to the extending direction, and in the second inspection process, the edge having the S pole or the N pole of the permanent magnet of the magnetic field application unit 3 is moved while maintaining the same angle as the installation angle of the permanent magnet in the first inspection process with respect to the extending direction.

Therefore, the magnetization amounts of the crossing reinforcing bars 5 in the first magnetization step (forward magnetization) and the second magnetization step (reverse magnetization) are substantially the same, and the influence of the crossing reinforcing bars 5 can be canceled when the third inspection data is generated.

Further, in the first inspection step and the second inspection step of the non-destructive inspection method, the edge having the S pole or the N pole of the permanent magnet of the magnetic field application unit 3 is moved in a state of being maintained parallel to the extending direction of the magnetic material (the crossing reinforcing bar 5) other than the inspection target object 8 contained in the non-magnetic material 7.

Therefore, the crossing reinforcing bar 5 can be uniformly magnetized.

Furthermore, in the non-destructive inspection method, the magnetic sensor 21 is composed of at least one pair of magnetic sensors (main sensor 21M and reference sensor 21R) arranged at different distances from the surfaces of the inspection target object 8 in the vertical direction (the Z-axis direction), and the first inspection data and the second inspection data are values obtained by subtracting the measurement result of the magnetic sensor (the reference sensor 21M) farther from the inspection target object 8 from the measurement result of the magnetic sensor (the main sensor 21R) closer to the inspection target object 8.

Therefore, it is possible to eliminate the influence of the environment such as the magnetic field of the earth in the first inspection data and the second inspection data.

Furthermore, in the non-destructive inspection method, the plurality of magnetic sensors 21 are arranged two dimensionally in the extending direction (the X-axis direction) and the horizontal direction (the Y-axis direction) orthogonal to the extending direction on at least one or more same surfaces, thereby having two dimensional inspection coordinates, or the inspection coordinates can be changed by a scanning mechanism that is movable in the extending direction.

Therefore, the magnetic sensor 21 can measure the magnetic field at two dimensional inspection coordinates.

In addition, in the non-destructive inspection method, the magnetic sensor 21 is a triaxial magnetic sensor that measures magnetic fields in three axial directions which are the extending direction (X-axis direction), the first direction (Y-axis direction) orthogonal to the extending direction, and the second direction (Z-axis direction) orthogonal to the extending direction and the first direction, and the first inspection data, the second inspection data, and the third inspection data have inspection data for each of the three axial directions for each inspection coordinate.

Therefore, the inspection target object 8 can be diagnosed with higher accuracy on the basis of the Z-axis component, the X-axis component, and the Y-axis component of the third inspection data.

Furthermore, the non-destructive inspection method includes a coordinate detection step of detecting, based on the first inspection data, the coordinate in the extending direction of the magnetic field derived from the magnetic material (crossing reinforcing bar 5) crossing the inspection target object 8 and other than the inspection target object 8, and detecting, based on the second inspection data, the coordinate in the extending direction of the magnetic field derived from the magnetic material other than the inspection target object 8, and the misregistration sensing step of sensing, when a difference between the coordinate of the first inspection data and the coordinate of the second inspection data detected in the coordinate detection step is equal to or more than a predetermined threshold, that there is a misregistration between the inspection positions of the first inspection step and the second inspection step.

Therefore, it is possible to prevent the third inspection data from being generated in a state where a misregistration occurs between the inspection positions of the first inspection step and the second inspection step.

Further, the non-destructive inspection method includes the notification step of notifying when the misregistration is sensed in the misregistration sensing step.

Therefore, the user can easily recognize the occurrence of the misregistration.

Further, the non-destructive inspection method includes the correction value acquiring step of acquiring a difference between the coordinate of the first inspection data and the coordinate of the second inspection data detected in the coordinate detection step as a correction value, and the position correction step of correcting the coordinate of the first inspection data and the coordinate of the second inspection data to coincide with each other on the basis of the correction value acquired in the correction value acquiring step.

Therefore, the third inspection data can be generated from the first inspection data and the second inspection data in which there is no misregistration in the inspection position. Therefore, the inspection target object 8 can be diagnosed with higher accuracy based on the third inspection data.

Further, the non-destructive inspection method includes the first inspection data identification step of assigning the identification information to the first inspection data, the second inspection data identification step of assigning the identification information to the second inspection data, and the linkage step of linking the identification information assigned to the first inspection data and the identification information assigned to the second inspection data, and in the third inspection data generation step, the third inspection data is generated based on the first inspection data and the second inspection data linked in the linkage step.

Therefore, after the first inspection step and the first inspection data generation step for a plurality of measurement surfaces are collectively performed, the second inspection step and the second inspection data generation step for a plurality of measurement surfaces can be collectively performed. Therefore, the non-destructive inspection can be efficiently performed.

In the non-destructive inspection method, the magnetic field application unit 3 includes the permanent magnet or the electromagnet.

Furthermore, in the non-destructive inspection method, the magnetic field application unit 3 and the magnetic sensor 21 are integrally formed to be scannable, and in the first inspection step, measurement is performed while the magnetic sensor 21 is moved in the extending direction subsequent to the magnetic field application unit 3, and in the second inspection step, the measurement is performed while the magnetic sensor 21 is moved in the extending direction opposite to the first inspection process subsequent to the magnetic field application unit 3.

Therefore, the first magnetization step and the first measurement step can be performed together. Further, the second magnetization step and the second measurement step can be performed together. Therefore, the non-destructive inspection can be efficiently performed.

In the first inspection step of the non-destructive inspection method, the inspection target object 8 is continuously magnetized by moving the magnetic field application unit 3 along the extending direction on two faces (first face 7A and second face 7B) with the bending portion 7C of the front surface of the non-magnetic material 7 as the boundary, and the magnetic field leaking from the magnetized inspection target object 8 to the outside of the non-magnetic material 7 is measured on each of the two faces, the magnetic field application unit 3 is moved along the extending direction on two faces (first surface 7A and second surface 7C) with a bending portion 7C of the surfaces of the non-magnetic material 7 as the boundary, the inspection target object 8 is continuously magnetized so that the S pole and the N pole are in the reverse direction with respect to the first inspection step, and the magnetic field leaking from the magnetized inspection target object 8 to the outside of the non-magnetic material is measured on each of the two faces.

Therefore, it is possible to more accurately perform the non-destructive inspection using magnetism also on the inspection target object 8 having the bending portion 8C.

The description in the above embodiment is an example of the non-destructive inspection system according to the present invention, and the present invention is not limited to this. The detailed configuration and detailed operation of each apparatus constituting the system can be appropriately modified without departing from the scope of the present invention.

For example, the information processing apparatus that performs the processing of manifesting the magnetic field component derived from the inspection target object is not limited to the cloud computer 9, but may be any hardware configuration such as a computer that is connected to the non-destructive inspection apparatus 1 on a one to-one basis or a computer that is integrally mounted on the non-destructive inspection apparatus. In a case of performing processing at one site of the cloud computer 9, it is advantageous in points of integration of information, uniform processing, use and the like.

The sensor unit 2 may be configured as a scanning type in the X-axis direction and the Y-axis direction.

Furthermore, although the above-described embodiment is configured to acquire two dimensional distribution data in a plurality of rows in the X-axis direction and the Y-axis direction, it may be implemented as a configuration to acquire one dimensional distribution data in one row in the Y-axis direction if it can be omitted depending on the processing content.

Alternatively, instead of the two magnetic sensors 21 arranged in the Z-axis direction, only a single magnetic sensor (main sensor) may be provided in the Z direction.

### Industrial Applicability

The present invention is applicable to a non-destructive inspection method, a program, and a non-destructive inspection system.

### Reference Signs List

10 NON-DESTRUCTIVE INSPECTION SYSTEM
1 NON-DESTRUCTIVE INSPECTION APPARATUS
2 SENSOR UNIT
21 MAGNETIC SENSOR
21M MAIN SENSOR
21MB SUBSTRATE
21R REFERENCE SENSOR
21RB SUBSTRATE
22 A/D UNIT
23 MOBILE COMMUNICATION UNIT
24 CPU
25 OPERATION PART
26 HOUSING
26M MEASUREMENT SURFACE
3 MAGNETIC FIELD APPLICATION UNIT
4 PORTABLE COMPUTER
5 CROSSING REINFORCING BAR
7 NON-MAGNETIC MATERIAL
7A FIRST FACE
7B SECOND FACE
7C BENDING PORTION
8 INSPECTION TARGET OBJECT
8B FRACTURE PORTION
8C BENDING PORTION
9 CLOUD COMPUTER (INFORMATION PROCESSING APPARATUS) (FIRST INSPECTION DATA GENERATOR, SECOND INSPECTION DATA GENERATOR, THIRD INSPECTION DATA GENERATOR, DISPLAY CONTROLLER)
11 WHEEL

## Claims

1. A non-destructive inspection method in which a magnetic material contained in a non-magnetic material is an inspection target object, the method comprising:
first inspecting that includes applying a magnetic field generated from a magnetic field application unit to the inspection target object from an outside of the non-magnetic material to magnetize the inspection target object in an extending direction and measuring, with a magnetic sensor, the magnetic field leaking from the magnetized inspection target object to the outside of the non-magnetic material;
second inspecting that includes applying a magnetic field generated from the magnetic field application unit to the inspection target object from the outside of the non-magnetic material to magnetize the inspection target object in the extending direction to make an S pole and an N pole be an opposite direction to that in the first inspecting, and measuring the magnetic field leaking from the magnetized inspection target object to the outside of the non-magnetic material by the magnetic sensor;
generating third inspection data on the basis of first inspection data based on a measurement result of the first inspecting and second inspection data based on the measurement result of the second inspecting, and
diagnosing the inspection target object based on the third inspection data,
wherein in the third inspection data generating, at least one of reducing a noise magnetic field component other than a magnetic field component derived from the inspection target object and enhancing the magnetic field component derived from the inspection target object is performed.

2. The non-destructive inspection method according to claim 1, wherein in the third inspection data generating, the third inspection data is generated based on a difference between the first inspection data and the second inspection data.

3. The non-destructive inspection method according to claim 1, wherein,
the magnetic field application unit includes a permanent magnet including the S pole and the N pole at respective ends, and
in the first inspecting and the second inspecting, the magnetic field application unit is moved in the extending direction in a vertical arrangement in which an S pole side or an N pole side of the permanent magnet is brought close to a surface of the non-magnetic material and a pole side opposite to a pole brought close is kept away from the surface, and a direction of movement of the magnetic field application unit is opposite between the first inspecting and the second inspecting.

4. The non-destructive inspection method according to claim 1, wherein,
the magnetic field application unit includes a permanent magnet including the S pole and the N pole at respective ends, and
in the first inspecting and the second inspecting, the magnetic field application unit is moved in the extending direction in a horizontal arrangement in which an S pole side and an N pole side of the permanent magnet are along the extending direction on the surface of the non-magnetic material, and a direction of movement of the magnetic field application unit is opposite between the first inspecting and the second inspecting.

5. The non-destructive inspection method according to claim 3 or 4, wherein,
in the first inspecting, an edge of the permanent magnet having the S pole or the N pole is moved in a state of maintaining a right angle or a predetermined angle with respect to the extending direction, and
in the second inspecting, the edge of the permanent magnet having the S pole or the N pole is moved in a state of maintaining the same angle as an installation angle of the permanent magnet in the first inspecting with respect to the extending direction.

6. The non-destructive inspection method according to claim 5,wherein in the first inspecting and the second inspecting, an edge of the permanent magnet having the S pole or the N pole is moved in a state of maintaining parallel to the extending direction of the magnetic material other than the inspection target object which is contained in the non-magnetic material.

7. The non-destructive inspection method according to claim 1, wherein,
the magnetic sensor includes at least one pair of magnetic sensors disposed at different distances from a surface of the inspection target object in a vertical direction, and
the first inspection data and the second inspection data are values obtained by subtracting a measurement result of the magnetic sensor on a side far from the inspection target object from the measurement result of the magnetic sensor on the side close to the inspection target object.

8. The non-destructive inspection method according to claim 1, wherein the plurality of magnetic sensors have two dimensional inspection coordinates by being two dimensionally arranged in the extending direction and a horizontal direction orthogonal to the extending direction on at least one or more same faces, or the inspection coordinates can be changed by a scanning mechanism movable in the extending direction.

9. The non-destructive inspection method according to claim 8, wherein,
the magnetic sensor is a triaxial magnetic sensor that measures magnetic fields in three axial directions which are the extending direction, a first direction orthogonal to the extending direction, and a second direction orthogonal to the extending direction and the first direction, and
the first inspection data, the second inspection data, and the third inspection data include inspection data for each of the three axial directions for each of the inspection coordinates.

10. The non-destructive inspection method according to claim 1, further comprising
detecting, based on the first inspection data, a coordinate in the extending direction of the magnetic field derived from the magnetic material other than the inspection target object that intersects with the inspection target object and detecting, based on the second inspection data, the coordinate in the extending direction of the magnetic field derived from the magnetic material other than the inspection target object, and
sensing that there is a misregistration between the inspection positions in the first inspecting and the second inspecting in a case in which a difference between the coordinate of the first inspection data and the coordinate of the second inspection data detected in the coordinate detecting is equal to or larger than a predetermined threshold value.

11. The non-destructive inspection method according to claim 10, further comprising notifying a notification in a case in which the misregistration is sensed in the misregistration sensing.

12. The non-destructive inspection method according to claim 10 or 11, further comprising,
acquiring, as a correction value, a difference between the coordinate of the first inspection data and the coordinate of the second inspection data detected in the coordinate detecting, and
correcting the coordinate of the first inspection data and the coordinate of the second inspection data to coincide with each other based on the correction value acquired in the correction value acquiring.

13. The non-destructive inspection method according to claim 1, further comprising,
assigning identification information to the first inspection data,
assigning identification information to the second inspection data, and
associating the identification information assigned to the first inspection data and the identification information assigned to the second inspection data with each other,
wherein in the third inspection data generating, the third inspection data is generated based on the first inspection data and the second inspection data associated with each other in the associating.

14. The non-destructive inspection method according to claim 1, wherein the magnetic field application unit includes a permanent magnet or an electromagnet.

15. The non-destructive inspection method according to claim 1, wherein,
the magnetic field application unit and the magnetic sensor are integrated and configured to be capable of scanning,
in the first inspecting, measurement is performed while the magnetic sensor is moved in the extending direction subsequent to the magnetic field application unit, and
in the second inspecting, measurement is performed while the magnetic sensor is moved in a direction opposite to that in the first inspecting subsequently to the magnetic field application unit.

16. The non-destructive inspection method according to claim 1, wherein,
in the first inspecting, the magnetic field application unit is moved along the extending direction on two faces with a bending portion of a surface of the non-magnetic material as a boundary, the inspection target object is continuously magnetized, and the magnetic field leaking from the magnetized inspection target object to the outside of the non-magnetic material is measured on each of the two faces, and
in the second inspecting, the magnetic field application unit is moved in two faces with the bending portion of the surface of the non-magnetic material as the boundary along the extending direction, the inspection target object is continuously magnetized to make the S pole and the N pole be an opposite direction to that in the first inspecting, and the magnetic field leaking from the magnetized inspection target object to the outside of the non-magnetic material is measured in each of the two faces.

17. A program that causes a computer of an information processing apparatus included in a non-destructive inspection system in which a magnetic material contained in a non-magnetic material is an inspection target object to function as,
a first inspection data generator configured to generate first inspection data based on a measurement result of first inspecting of applying a magnetic field generated from a magnetic field application unit to the inspection target object from the outside of the non-magnetic material to magnetize the inspection target object in an extending direction and measuring the magnetic field leaking from the magnetized inspection target object to the outside of the non-magnetic material by a magnetic sensor;
a second inspection data generator configured to generate second inspection data based on a measurement result of second inspecting of applying the magnetic field generated from the magnetic field application unit to the inspection target object from the outside of the non-magnetic material to magnetize the inspection target object in the extending direction to make an S pole and an N pole be an opposite direction with respect to the first inspecting, and measuring the magnetic field leaking from the magnetized inspection target object to the outside of the non-magnetic material by the magnetic sensor;
a third inspection data generator configured to generate third inspection data based on the first inspection data and the second inspection data; and
a display controller configured to cause a display to display the third inspection data,
wherein
the third inspection data generator performs at least one of reducing a noise magnetic field component other than a magnetic field component derived from the inspection target object and enhancing the magnetic field component derived from the inspection target object.

18. A non-destructive inspection system in which a magnetic material contained in a non-magnetic material is an inspection target object, the system comprising:
a first inspection data generator configured to generate first inspection data based on a measurement result of first inspecting of applying a magnetic field generated from a magnetic field application unit to the inspection target object from the outside of the non-magnetic material to magnetize the inspection target object in an extending direction and measuring the magnetic field leaking from the magnetized inspection target object to the outside of the non-magnetic material by a magnetic sensor;
a second inspection data generator configured to generate second inspection data based on a measurement result of second inspecting of applying the magnetic field generated from the magnetic field application unit to the inspection target object from the outside of the non-magnetic material to magnetize the inspection target object in the extending direction to make an S pole and an N pole be an opposite direction with respect to the first inspecting, and measuring the magnetic field leaking from the magnetized inspection target object to the outside of the non-magnetic material by the magnetic sensor;
a third inspection data generator configured to generate third inspection data based on the first inspection data and the second inspection data; and
a display controller configured to cause a display to display the third inspection data,
wherein the third inspection data generator performs at least one of reducing a noise magnetic field component other than a magnetic field component derived from the inspection target object and enhancing the magnetic field component derived from the inspection target object.

19. The non-destructive inspection system according to claim 18, further comprising,
a non-destructive inspection apparatus including the first inspection data generator, the second inspection data generator, and the third inspection data generator; and
an information processing apparatus that is configured to be communicable with the non-destructive inspection apparatus and that includes the display controller.

20. The non-destructive inspection system according to claim 19, wherein,
the non-destructive inspection apparatus includes,
a coordinate detector that detects, based on the first inspection data, a coordinate in the extending direction of the magnetic field derived from the magnetic material other than the inspection target object that intersects with the inspection target object and that detects, based on the second inspection data, the coordinate in the extending direction of the magnetic field derived from the magnetic material other than the inspection target object,
a misregistration sensor that senses that there is a misregistration between inspection positions in the first inspecting and the second inspecting in a case in which a difference between the coordinate of the first inspection data and the coordinate of the second inspection data detected by the coordinate detector is equal to or larger than a predetermined threshold value,
a correction value acquirer that acquires, as a correction value, a difference between the coordinate of the first inspection data and the coordinate of the second inspection data detected by the coordinate detector, and
a position corrector that corrects the coordinate of the first inspection data and the coordinate of the second inspection data to coincide with each other based on the correction value acquired by the correction value acquirer.
